# EUROPEAN PATENT SPECIFICATION

(11) **EP 4 406 892 B1**
(45) Date of publication and mention of the grant of the patent: **30.09.2026**
(21) Application number: 22872527.1
(22) Date of filing: 13.07.2022
(51) Int. Cl.: B65H 37/04, B65H 37/06, G03G 15/22, B42D 15/02, G03G 9/08, G03G 9/087, B32B 37/12

(54) **METHOD FOR PRODUCING THREE-DIMENSIONAL OBJECT**
VERFAHREN ZUR HERSTELLUNG EINES DREIDIMENSIONALEN OBJEKTS
PROCÉDÉ DE FABRICATION D'OBJET TRIDIMENSIONNEL

(30) Priority: 22.09.2021 JP 2021154745
(43) Date of publication of application: 31.07.2024
(73) Proprietor: Fujifilm Business Innovation Corp., Tokyo 107-0052 (JP)
(72) Inventor: OKUBO Tomoyo, Minamiashigara-shi, Kanagawa 250-0111 (JP); CHONAN Shiori, Minamiashigara-shi, Kanagawa 250-0111 (JP); YAMANAKA Kiyohiro, Minamiashigara-shi, Kanagawa 250-0111 (JP)
(74) Representative: Haseltine Lake Kempner LLP
(86) International application number: PCT/JP2022/027560
(87) International publication number: WO 2023/047771

(56) References cited:
- JP-A- 2000 177 017
- JP-A- 2005 298 551
- JP-A- 2005 298 551
- JP-A- 2021 018 425
- JP-A- 2021 018 425
- JP-A- 2021 140 121
- JP-A- 2021 140 121
- JP-A- H07 101 184
- JP-A- H07 101 184

## Description

### Technical Field

The present invention relates to a method for producing a three-dimensional object.

### Background Art

A method for producing a pop-up paper craft described in PTL 1 includes: a two-folding step (S1) of folding a sheet of paper in two; a gluing step (S2) of gluing a predetermined area of a triangle formed by connecting a predetermined point on a free end of the upper half surface that comes to the top surface in the two-folding step, a predetermined point on a center line that passes through the center of the fold line of a valley fold and that is perpendicular to the fold line, and a point of intersection of the center line and the free end; and a four-folding step (S3) of making a valley fold at the center line.

### Citation List

### Patent Literature

PTL 1: Japanese Unexamined Patent Application Publication No. 2015-44294

### Summary of Invention

### Technical Problem

At least one exemplary embodiment of the present invention eliminates or reduces variations in the shape of a three-dimensional part generated by variations in the position of an adhesive part compared with a case where the adhesive part is formed on a portion of the print medium by using a spray or other methods.

### Solution to Problem

The invention is defined by the appended claims.
[1] According to at least one embodiment of the present invention, a method for producing a three-dimensional object includes among other features: a step of forming an adhesive part on a portion of a sheet-shaped print medium by an electrophotographic system using a pressure-induced phase transition resin toner that exhibits adhesion when undergoing phase transition under pressure; and a step of forming a three-dimensional part by folding part of the print medium so that the portion of the print medium that has the adhesive part formed thereon is bonded to a different portion of the print medium The following aspects are useful for understanding the claimed invention:
   [2] In the method for producing a three-dimensional object according to [1], an image may also be formed on the print medium in the step of forming the adhesive part.
   [3] In the method for producing a three-dimensional object according to [1] or [2], the step of forming the adhesive part may involve forming, on the print medium, the adhesive part including a first adhesive part and a second adhesive part having weaker adhesive force than the first adhesive part.
   [4] In the method for producing a three-dimensional object according to [3], the step of forming the adhesive part may involve forming the adhesive part on the print medium such that the first adhesive part has a higher toner concentration than the second adhesive part.
   [5] In the method for producing a three-dimensional object according to [4], the step of forming the adhesive part may involve forming the adhesive part on the print medium such that the adhesive force varies from the first adhesive part to the second adhesive part.
   [6] In the method for producing a three-dimensional object according to any one of [1] to [5], the step of forming the adhesive part may involve forming, on the print medium, a plurality of the adhesive parts separated from each other and different in color.
   [7] In the method for producing a three-dimensional object according to [6], the step of forming the adhesive part may involve forming the adhesive parts on the print medium such that a front side of the print medium and a back side of the print medium have different colors in the adhesive parts.
   [8] In the method for producing a three-dimensional object according to any one of [1] to [7], the step of forming the three-dimensional part may involve folding part of the print medium into a flat shape and pressing the print medium so that the portion of the print medium that has the adhesive part formed thereon is bonded to a different portion of the print medium.
   [9] In the method for producing a three-dimensional object according to any one of [1] to [8], the pressure-induced phase transition resin toner may include a styrene-based resin containing styrene and a vinyl monomer other than styrene as polymer components and a (meth)acrylate-based resin containing at least two (meth)acrylates as polymer components, wherein a mass percentage of the (meth)acrylates relative to a total mass of polymer components of the (meth)acrylate-based resin may be 90 mass% or more, and the pressure-induced phase transition resin toner may have at least two glass transition temperatures, and a difference between a lowest glass transition temperature and a highest glass transition temperature may be 30°C or more.
   [10] In the method for producing a three-dimensional object according to [9], the pressure-induced phase transition resin toner may contain pressure-induced phase transition resin toner particles, and the pressure-induced phase transition resin toner particles may include a sea phase containing the styrene-based resin and island phases containing the (meth)acrylate-based resin and dispersed in the sea phase.
   [11] In the method for producing a three-dimensional object according to [10], the island phases may have an average size of 200 nm or more and 500 nm or less.

### Advantageous Effects of Invention

According to [1], variations in the shape of the three-dimensional part generated by variations in the position of the adhesive part can be eliminated or reduced compared with a case where the adhesive part is formed on a portion of the print medium by using a spray or other methods.

According to [2], variations in relative position between the adhesive part and the image can be eliminated or reduced compared with a case where the adhesive part and the image are formed on the print medium in different steps.

According to [3], the first adhesive part and the second adhesive part can correspond to an area that requires strong adhesive force and an area that requires weak adhesive force.

According to [4], the number of types of toner can be reduced compared with a case where the adhesive force is varied by changing the type of toner.

According to [5], moderate adhesive force between strong adhesive force and week adhesive force can be given in a required area.

According to [6], defective products can be extracted more easily during the process compared with a case where the adhesive parts all have the same color.

According to [7], defective products can be extracted more easily during the process compared with a case where the front side and the back side have the same color in the adhesive parts.

According to [8], the portion of the print medium that has the adhesive part formed thereon can be easily bonded to a different portion of the print medium compared with a case where pressing a print medium having projections or recesses bonds the portion of the print medium that has the adhesive part formed thereon to a different portion of the print medium.

According to [9], the adhesive part exhibits good adhesion compared with a case where the pressure-induced phase transition resin toner contains a styrene-based resin and a (meth)acrylate-based resin wherein the (meth)acrylate-based resin is a (meth)acrylate homopolymer.

According to [10], the adhesive part exhibits good adhesion compared with a case where the pressure-induced phase transition resin toner particles contained in the pressure-induced phase transition resin toner do not have a sea-island structure.

According to [11], the adhesive part exhibits good adhesion compared with a case where the island phases in the sea-island structure of the pressure-induced phase transition resin toner particles have an average size of more than 500 nm.

### Brief Description of Drawings

[Fig. 1] Fig. 1 is a schematic structural view of an image forming apparatus used in an adhesive part forming step in a method for producing a three-dimensional object according to a first exemplary embodiment of the present invention.
[Fig. 2] Fig. 2 is a schematic structural view of a forming unit of the image forming apparatus used in the adhesive part forming step in the method for producing a three-dimensional object according to the first exemplary embodiment of the present invention.
[Fig. 3A] Fig. 3A illustrates an image formed on the front side of a print medium in the adhesive part forming step in the method for producing a three-dimensional object according to the first exemplary embodiment of the present invention.
[Fig. 3B] Fig. 3B illustrates an image formed on the back side of the print medium in the adhesive part forming step in the method for producing a three-dimensional object according to the first exemplary embodiment of the present invention.
[Fig. 4A] Fig. 4A illustrates an adhesive part formed on the front side of the print medium in the adhesive part forming step in the method for producing a three-dimensional object according to the first exemplary embodiment of the present invention.
[Fig. 4B] Fig. 4B illustrates an adhesive part formed on the back side of the print medium in the adhesive part forming step in the method for producing a three-dimensional object according to the first exemplary embodiment of the present invention.
[Fig. 5A] Fig. 5A is a process view illustrating a three-dimensional part forming step in the method for producing a three-dimensional object according to the first exemplary embodiment of the present invention.
[Fig. 5B] Fig. 5B is a process view illustrating the three-dimensional part forming step in the method for producing a three-dimensional object according to the first exemplary embodiment of the present invention.
[Fig. 6A] Fig. 6A is a process view illustrating the three-dimensional part forming step in the method for producing a three-dimensional object according to the first exemplary embodiment of the present invention.
[Fig. 6B] Fig. 6B is a process view illustrating the three-dimensional part forming step in the method for producing a three-dimensional object according to the first exemplary embodiment of the present invention.
[Fig. 7A] Fig. 7A is a process view illustrating the three-dimensional part forming step in the method for producing a three-dimensional object according to the first exemplary embodiment of the present invention.
[Fig. 7B] Fig. 7B is a process view illustrating the three-dimensional part forming step in the method for producing a three-dimensional object according to the first exemplary embodiment of the present invention.
[Fig. 7C] Fig. 7C is a process view illustrating the three-dimensional part forming step in the method for producing a three-dimensional object according to the first exemplary embodiment of the present invention.
[Fig. 8] Fig. 8 is a process view illustrating the three-dimensional part forming step in the method for producing a three-dimensional object according to the first exemplary embodiment of the present invention.
[Fig. 9A] Fig. 9A is a process view illustrating an adhesive part forming step and a three-dimensional part forming step in a method for producing a three-dimensional object according to a second exemplary embodiment of the present invention.
[Fig. 9B] Fig. 9B is a process view illustrating the adhesive part forming step and the three-dimensional part forming step in the method for producing a three-dimensional object according to the second exemplary embodiment of the present invention.
[Fig. 10A] Fig. 10A is a process view illustrating the three-dimensional part forming step in the method for producing a three-dimensional object according to the second exemplary embodiment of the present invention.
[Fig. 10B] Fig. 10B is a process view illustrating the three-dimensional part forming step in the method for producing a three-dimensional object according to the second exemplary embodiment of the present invention.
[Fig. 11A] Fig. 11A is a process view illustrating an adhesive part forming step and a three-dimensional part forming step in a method for producing a three-dimensional object according to a third exemplary embodiment of the present invention.
[Fig. 11B] Fig. 11B is a process view illustrating the adhesive part forming step and the three-dimensional part forming step in the method for producing a three-dimensional object according to the third exemplary embodiment of the present invention.
[Fig. 12A] Fig. 12A is a process view illustrating the three-dimensional part forming step in the method for producing a three-dimensional object according to the third exemplary embodiment of the present invention.
[Fig. 12B] Fig. 12B is a process view illustrating the three-dimensional part forming step in the method for producing a three-dimensional object according to the third exemplary embodiment of the present invention.
[Fig. 13A] Fig. 13A is a process view illustrating an adhesive part forming step and a three-dimensional part forming step in a method for producing a three-dimensional object according to a fourth exemplary embodiment of the present invention.
[Fig. 13B] Fig. 13B is a process view illustrating the adhesive part forming step and the three-dimensional part forming step in the method for producing a three-dimensional object according to the fourth exemplary embodiment of the present invention.
[Fig. 14A] Fig. 14A is a process view illustrating the three-dimensional part forming step in the method for producing a three-dimensional object according to the fourth exemplary embodiment of the present invention.
[Fig. 14B] Fig. 14B is a process view illustrating the three-dimensional part forming step in the method for producing a three-dimensional object according to the fourth exemplary embodiment of the present invention.
[Fig. 14C] Fig. 14C is a process view illustrating the three-dimensional part forming step in the method for producing a three-dimensional object according to the fourth exemplary embodiment of the present invention.
[Fig. 15] Fig. 15 illustrates an adhesive part formed on the back side of a print medium in an adhesive part forming step in a method for producing a three-dimensional object according to a fifth exemplary embodiment of the present invention.
[Fig. 16] Fig. 16 is a schematic structural view of an image forming apparatus used in an adhesive part forming step for a three-dimensional object according to a sixth exemplary embodiment of the present invention.
[Fig. 17A] Fig. 17A illustrates an adhesive part formed on the front side of a print medium in the adhesive part forming step in the method for producing a three-dimensional object according to the sixth exemplary embodiment of the present invention.
[Fig. 17B] Fig. 17B illustrates an adhesive part formed on the back side of a print medium in the adhesive part forming step in the method for producing a three-dimensional object according to the sixth exemplary embodiment of the present invention.

### Description of Embodiments

### <First Exemplary Embodiment>

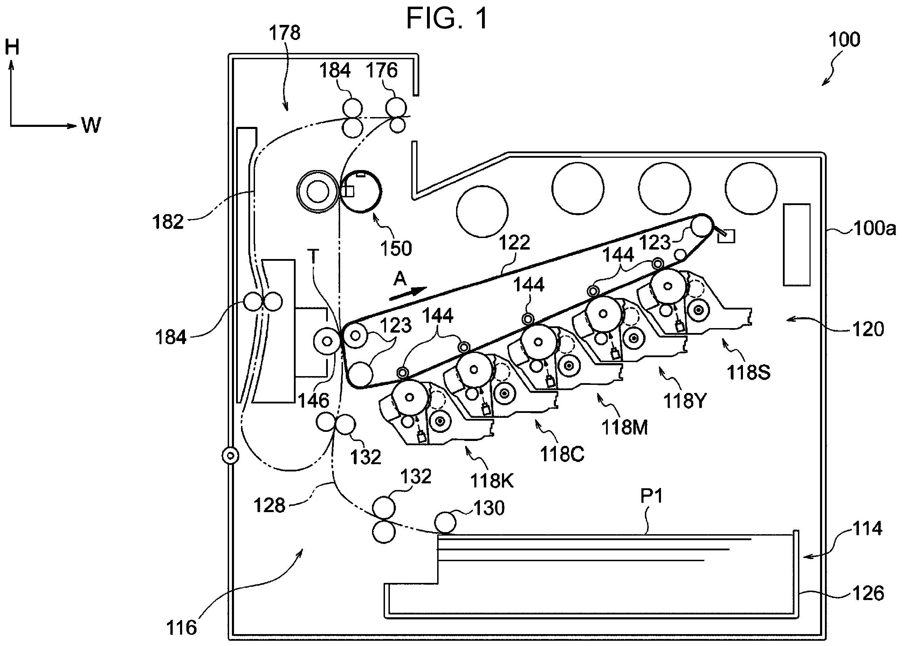

An example method for producing a three-dimensional object according to a first exemplary embodiment of the present invention will be described with reference to Fig. 1 to Fig. 8.

The method for producing a three-dimensional object includes an adhesive part forming step for forming an adhesive part and an image on part of a sheet-shaped print medium P1 by an electrophotographic system using a pressure-induced phase transition resin toner that exhibits adhesion when undergoing phase transition under pressure. The "image" is an image formed so as to be visible to users or workers. The print medium P1 is a printable medium. Examples of the print medium P1 include plain paper, glossy paper, and coated paper.

The method for producing a three-dimensional object further includes a three-dimensional part forming step of forming a three-dimensional part by folding at least part of the print medium P1, wherein at least part of the print medium P1 is folded so that a portion of the print medium P1 that has an adhesive part formed thereon is bonded to a different portion of the print medium P1. The "different portion of the print medium P1" includes a different portion of the print medium P1 that has the adhesive part formed thereon and a different portion of the print medium P1 that has no adhesive part formed thereon.

The adhesive part forming step will be first described, and the three-dimensional part step will be next described. The pressure-induced phase transition resin toner used in the adhesive part forming step will be described after the exemplary embodiments.

### (Adhesive Part Forming Step)

The adhesive part forming step involves forming an adhesive part 50 and an image on the sheet-shaped print medium P1 in an electrophotographic image forming apparatus 100 using various types of toner. Specifically, a pressure-induced phase transition resin toner that exhibits adhesion when undergoing phase transition under pressure is used to form the adhesive part 50, and different colors of toner are used to form an image 20.

The adhesive part forming step will be described with regard to the image forming apparatus 100, the adhesive part 50 and the image 20 formed on the print medium P1, and the step of forming the adhesive part 50 and the image 20 on the print medium P1 by using the image forming apparatus 100.

### [Image Forming Apparatus 100]

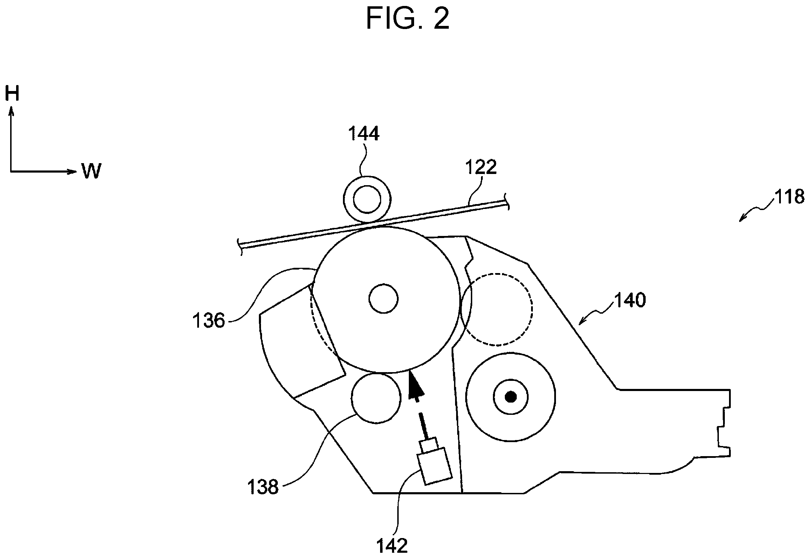

The image forming apparatus 100 will be described with reference to Fig. 1 and Fig. 2. In Fig. 1 and Fig. 2, the arrow H indicates an apparatus up-down direction (i.e., vertical direction), and the arrow W indicates an apparatus width direction (i.e., horizontal direction).

The image forming apparatus 100 includes a storage unit 114 that stores a sheet-shaped print medium P1, a transport unit 116 that transports the print medium P1 stored in the storage unit 114, and a forming section 120 that forms the adhesive part 50 and the image 20 on the print medium P1 transported from the storage unit 114 to the transport unit 116. The storage unit 114, the transport unit 116, and the forming section 120 are disposed in this order from below to above in the apparatus up-down direction.

### -Storage Unit 114-

The storage unit 114 includes a storage member 126 that can be pulled out from an apparatus body 100a of the image forming apparatus 100 toward the front in the apparatus depth direction. The storage member 126 is loaded with print media P1. The storage member 126 includes a sending roll 130 that sends the print media P1, which are loaded in the storage member 126, out to a transport path 128 constituting the transport unit 116.

### -Transport Unit 116-

The transport unit 116 includes multiple transport rolls 132 that transport the print medium P1 along the transport path 128 and discharge rolls 176 that discharges the print medium P1 to the outside of the apparatus body 100a.

The transport unit 116 includes a double-side transport unit 178 that turns the print medium P1 upside down in order to form the adhesive part 50 and the image 20 on both sides of the print medium P1. The double-side transport unit 178 includes a reverse path 182 that receives the print medium P1 transported by reversing the discharge rolls 176. Multiple transport rolls 184 are arranged along the reverse path 182, and the print medium P1 transported by the transport rolls 184 is transported to the transport rolls 132 again with the print medium P1 upside down.

### -Forming Section 120-

The forming section 120 includes five forming units 118Y, 118M, 118C, 118K, and 118S for yellow (Y), magenta (M), cyan (C), black (K), and adhesive (S). The forming units 118Y, 118M, 118C, and 118K for yellow (Y), magenta (M), cyan (C), black (K) use the respective colors of toner to form images to be transferred to the print medium P1. The forming unit 118S for adhesive (S) uses the pressure-induced phase transition resin toner to form an adhesive part to be transferred to the print medium P1.

In the following description, Y, M, C, K, and S may be omitted if there is no need to distinguish between Y, M, C, K, and S. Each forming unit 118 has the same structure except the toner used.

Referring to Fig. 2, each forming unit 118 includes an image carrier 136, a charging member 138 that charges the surface of the image carrier 136, and an exposure device 142 that irradiates the image carrier 136 with exposure light. Each forming unit 118 further includes a developing device 140 that develops an electrostatic latent image formed by irradiating the charged image carrier 136 with exposure light from the exposure device 142 to visualize the electrostatic latent image as a toner image.

Referring to Fig. 1, the forming section 120 includes an endless transfer belt 122 that runs in the direction of arrow A in the figure, multiple winding rolls 123 around which the transfer belt 122 is wound, and first transfer rolls 144 that transfer, to the transfer belt 122, toner images formed by the respective forming units 118. The forming section 120 further includes a second transfer roll 146 that transfers, to the print medium P1, the toner images that have been transferred to the transfer belt 122, and a fixing device 150 that fixes the toner images to the print medium P1 by heating and pressing the print medium P1 to which the toner images have been transferred.

### [Image 20, Adhesive Part 50]

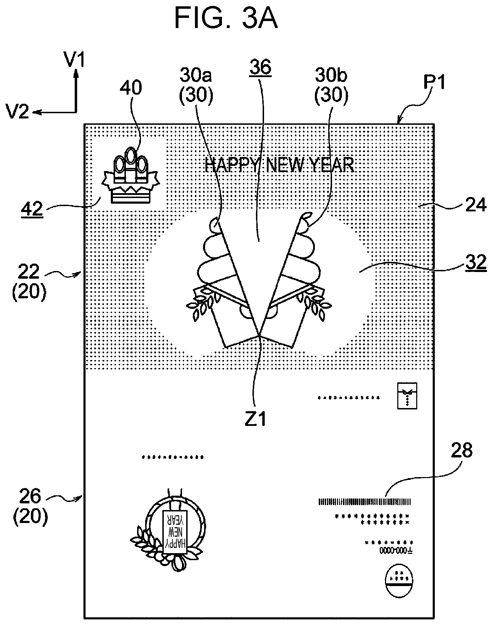

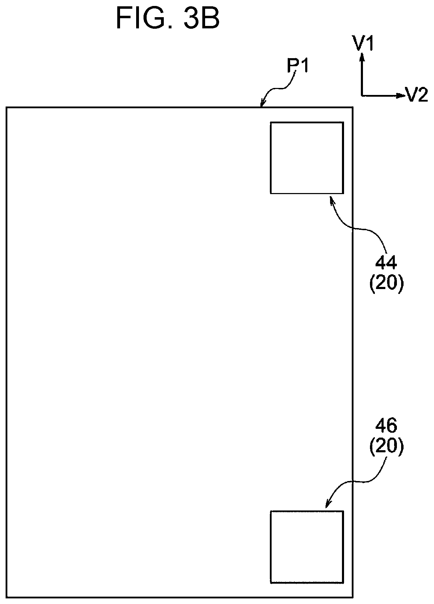

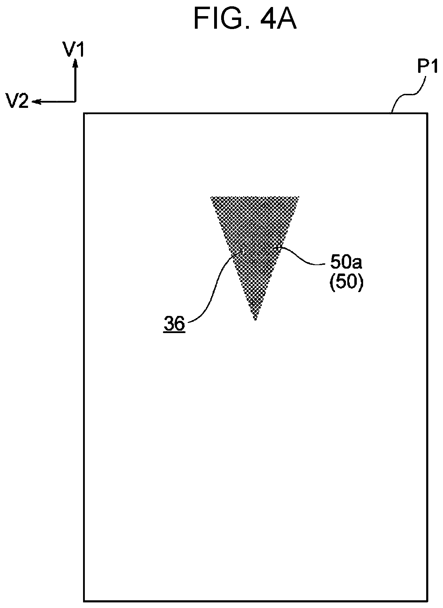

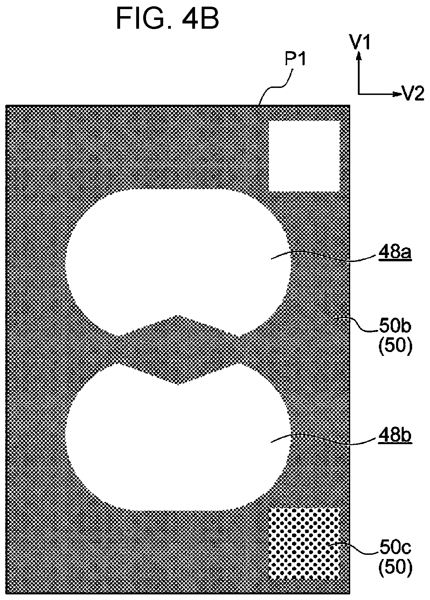

Next, the adhesive part 50 and the image 20 formed on the front side and the back side of the print medium P1 will be described with reference to Fig. 3A, Fig. 3B, Fig. 4A, and Fig. 4B. The image 20 formed on the front side of the print medium P1, the image 20 formed on the back side of the print medium P1, the adhesive part 50 formed on the front side of the print medium P1, and the adhesive part 50 formed on the back side of the print medium P1 will be described in this order. The print medium P1 has a rectangular shape elongating in the up-down direction in the figure.

### -Image 20 Formed on Front Side of Print Medium P1-

Referring to Fig. 3A, the image 20 formed on the front side of the print medium P1 includes an image 22 formed on a first side (upper side in figure) of the print medium P1 in the longitudinal direction of the print medium P1 (hereinafter "medium longitudinal direction"), and an image 26 formed on a second side (lower side in figure) of the print medium P1. The medium longitudinal direction is indicated by arrow V1 in the figure.

The image 22 formed on the first side in the medium longitudinal direction includes a colored color area 24 (area indicated by dots in figure), a first pop-up image portion 30 that is formed inside the color area 24 and shaped into a three-dimensional part, and a second pop-up image portion 40 that is formed inside the color area 24 and shaped into a three-dimensional part.

The "three-dimensional part" refers to a part that constitutes part of a three-dimensional object produced from the print medium P1 and that is put into a standing state from the other part. In other words, the "three-dimensional part" is a part that is put into a three-dimensional state, not in a flat state. The "three-dimensional part" includes both a part that is in a three-dimensional state when a three-dimensional object is produced, and a part that is not in a three-dimensional state when a three-dimensional object is produced, but may be put into a three-dimensional state.

A blank area 32 surrounded by the color area 24 is formed in a central area of the image 22 in the medium longitudinal direction and a central area in the transverse direction of the print medium P1 (hereinafter "medium transverse direction"). The blank area 32 has an elliptical shape elongating in the medium transverse direction. The first pop-up image portion 30 is formed inside the blank area 32. The medium transverse direction is indicated by arrow V2 in the figure.

The first pop-up image portion 30 is divided into a first pop-up image portion 30a and a first pop-up image portion 30b in the medium transverse direction. A triangular portion 36 is formed between the first pop-up image portion 30a and the first pop-up image portion 30b. The triangular portion 36 constitutes part of the blank area 32 and points to the second side (lower side in figure) in the medium longitudinal direction. The first pop-up image portion 30a and the first pop-up image portion 30b are in contact with each other at a point (point Z1 in figure) on the second side in the medium longitudinal direction.

A rectangular blank area 42 surrounded by the color area 24 is formed in a first side area in the medium longitudinal direction and a first side (left side in figure) area in the medium transverse direction. The second pop-up image portion 40 is formed inside the blank area 42.

The image 26 formed on the second side in the medium longitudinal direction includes a flat image portion 28. Specifically, the flat image portion 28 is formed on a second side (right side in figure) of the print medium P1 in the medium transverse direction.

### -Image 20 Formed on Back Side of Print Medium P1-

Referring to Fig. 3B, an image 20 formed on the back side of the print medium P1 includes a frame 44 and a frame 46. On the print medium P1, the frame 44 is formed in a first side area in the medium longitudinal direction and a first side area in the medium transverse direction, and the frame 46 is formed in a second side area in the medium longitudinal direction and a first side area in the medium transverse direction.

The frame 44 overlaps the edge of the blank area 42 (see Fig. 3A) on the front side in the medium thickness direction. The frame 46 and the frame 44 are symmetric with respect to the central portion in the medium longitudinal direction.

### -Adhesive Part 50 Formed on Front Side of Print Medium P1-

Referring to Fig. 4A, the adhesive part 50 (hereinafter "adhesive part 50a") formed on the front side of the print medium P1 has a triangular shape pointing to the second side in the medium longitudinal direction. Specifically, the adhesive part 50a is formed in the triangular portion 36 illustrated in Fig. 3A. The adhesive part 50a is colorless and transparent in this exemplary embodiment. The adhesive part 50a is an example first adhesive part.

### -Adhesive Part 50 Formed on Back Side of Print Medium P1-

Referring to Fig. 4B, an adhesive part 50 formed on the back side of the print medium P1 includes an adhesive part 50b and an adhesive part 50c. The adhesive parts 50b and 50c are colorless and transparent in this exemplary embodiment. The adhesive part 50b is an example first adhesive part, and the adhesive part 50c is an example second adhesive part.

The adhesive part 50b is formed in a region other than a portion 48a that overlaps the blank area 32 illustrated in Fig. 3A in the medium thickness direction, a portion 48b that is symmetric to the portion 48a with respect to the central portion in the medium longitudinal direction, and the inside of the frames 44 and 46 illustrated in Fig. 3B. The adhesive part 50b has the same adhesive force as the adhesive part 50a illustrated in Fig. 4A.

The rectangular adhesive part 50c is formed inside the frame 46 illustrated in Fig. 3B. The adhesive part 50c has weaker adhesive force than the adhesive parts 50a and 50b. In other words, the adhesive parts 50a and 50b have stronger adhesive force than the adhesive part 50c.

The strength of the adhesive force of the adhesive part 50 depends on the toner concentration. Specifically, when the adhesive parts 50a and 50b have higher toner concentration than the adhesive part 50c, the adhesive parts 50a and 50b have stronger adhesive force than the adhesive part 50c.

### [Step of Forming Adhesive Part 50 and Image 20 on Print Medium P1]

In the image forming apparatus 100, the adhesive part 50 and the image 20 are formed on the print medium P1 as described below.

First, each charging member 138 (see Fig. 2) included in the corresponding forming unit 118 and having a voltage applied thereto uniformly and negatively charges the surface of the corresponding image carrier 136 at a predetermined potential. Next, each exposure device 142 irradiates the charged surface of the corresponding image carrier 136 with exposure light on the basis of the image data input from outside to form an electrostatic latent image.

This process forms the electrostatic latent image corresponding to the image data on the surface of the image carrier 136 of the corresponding color. Each developing device 140 develops the electrostatic latent image to form a toner image.

Specifically, the forming units 118Y, 118M, 118C, and 118K each form a toner image corresponding to the image 20 to be formed on the front side of the print medium P, and the forming unit 118S forms a toner image corresponding to the adhesive part 50 to be formed on the front side of the print medium P1.

The first transfer rolls 144 illustrated in Fig. 1 transfer, to the transfer belt 122, the toner images formed on the surfaces of the respective image carriers 136.

The print medium P1 that has been sent out to the transport path 128 from the storage member 126 by the sending roll 130 is send out to a transfer position T at which the transfer belt 122 is in contact with the second transfer roll 146. At the transfer position T, the toner images on the transfer belt 122 are transferred to the front side of the print medium P1 when the print medium P1 is transported between the transfer belt 122 and the second transfer roll 146. Specifically, the toner images corresponding to the image 20 and the adhesive part 50 to be formed on the front side of the print medium P1 are transferred to the front side of the print medium P1.

The fixing device 150 fixes, to the front side of the print medium P1, the toner images that have been transferred to the front side of the print medium P1. When the discharge rolls 176 are reversed, the print medium P1 having the toner images fixed to the front side thereof is send out to the reverse path 182. This turns the print medium P1 upside down, and the transport rolls 184 transport the print medium P1 to the transport rolls 132.

Specifically, after the step described above, the forming units 118Y, 118M, 118C, and 118K each form a toner image corresponding to the image 20 to be formed on the back side of the print medium P1, and the forming unit 118S forms a toner image corresponding to the adhesive part 50 to be formed on the back side of the print medium P1.

The print medium P1 is send out to the transfer position T at which the transfer belt 122 is in contact with the second transfer roll 146. At the transfer position T, the toner images on the transfer belt 122 are transferred to the back side of the print medium P1 when the print medium P1 is transported between the transfer belt 122 and the second transfer roll 146. Specifically, the toner images corresponding to the image 20 and the adhesive part 50 to be formed on the back side of the print medium P1 are transferred to the back side of the print medium P1.

The fixing device 150 fixes, to the back side of the print medium P1, the toner images that have been transferred to the back side of the print medium P1. The forward rotating discharge rolls 176 discharge the print medium P1 having the toner images fixed thereto to the outside of the apparatus body 100a.

As described above, the adhesive part forming step involves forming the image 20 and the adhesive part 50 on the front side and the back side of the print medium P1 in the image forming apparatus 100.

### (Three-Dimensional Part Forming Step)

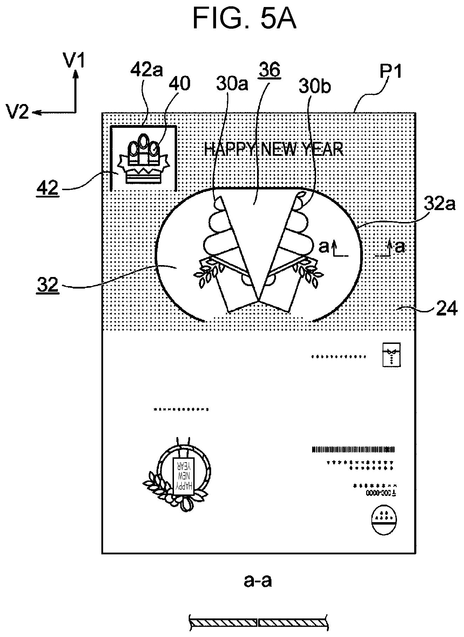

Referring to Fig. 5A, the three-dimensional part forming step involves first forming a cut 32a on part of the edge of the blank area 32 having an elliptical shape elongating in the medium transverse direction, and forming a cut 42a on part of the edge of the rectangular blank area 42.

Specifically, the cut 32a is formed on the straight edge of the blank area 32 on the first side in the medium longitudinal direction and the curved edges of the blank area 32 on both sides in the medium transverse direction. The cut 42a is formed on the straight edge of the rectangular blank area 42 on the first side in the medium longitudinal direction and the straight edges of the blank area 32 on both sides in the medium transverse direction. The cuts 32a and 42a may be formed by using, for example, a cutting machine.

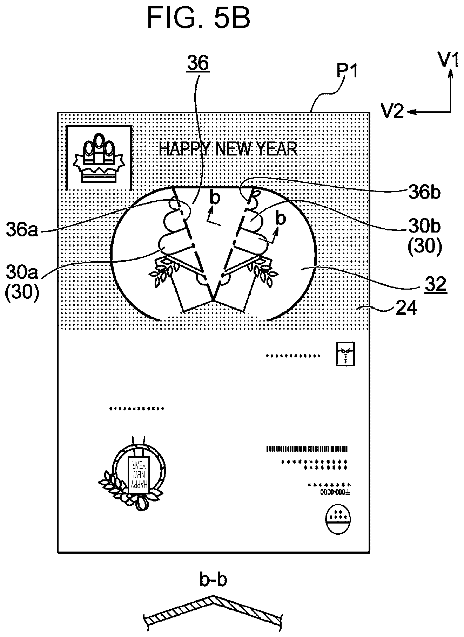

Next, referring to Fig. 5B, a fold line is formed at a boundary 36a between the triangular portion 36 and the first pop-up image portion 30a and a boundary 36b at the boundary 36b between the triangular portion 36 and the first pop-up image portion 30b. Specifically, a fold line is formed at each of the boundaries 36a and 36b to make a mountain fold as viewed from the front side.

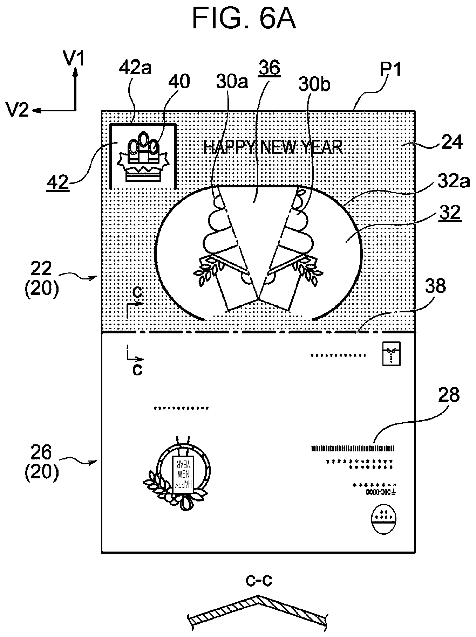

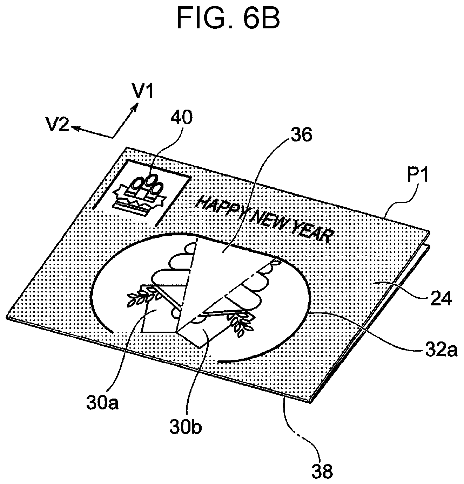

Next, referring to Fig. 6A and Fig. 6B, the print medium P1 is folded in two at a boundary 38 between a first side area and a second side area of the print medium P1 in the medium longitudinal direction. Specifically, the print medium P1 is folded in two at the boundary 38 to make a mountain fold as viewed from the front side.

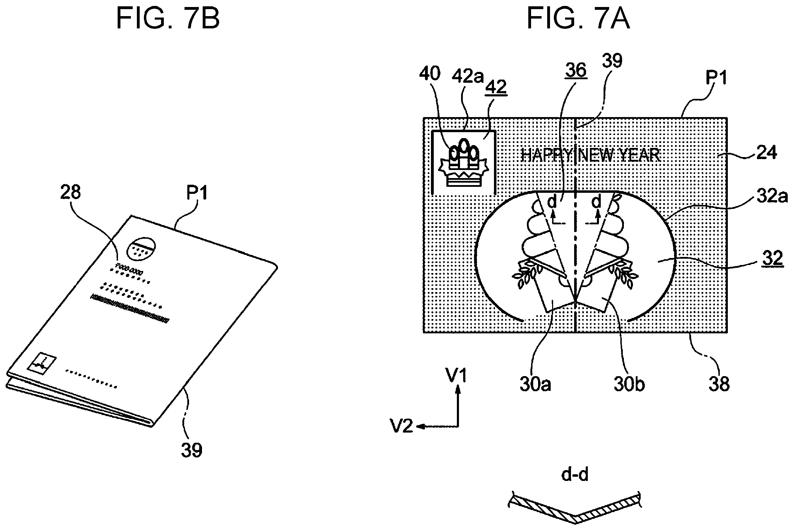

Next, referring to Fig. 7A and Fig. 7B, the two-folded print medium P1 is further folded in two at a boundary 39 between a first side area and a second side area of the two-folded print medium P1 in the medium transverse direction. Specifically, the two-folded print medium P1 is further folded in two at the boundary 39 to make a valley fold as viewed from the front side. The flat image portion 28 thus comes to the front side when the print medium P1 is folded in four.

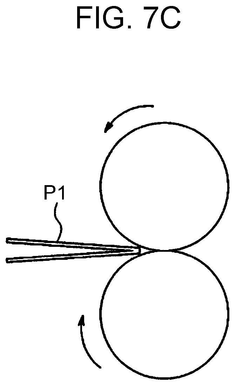

As illustrated in Fig. 7C, the print medium P1 that has been folded in four into a flat shape is entirely pressed by using a pair of rolls. In this process, the adhesive part 50b illustrated in Fig. 4B bonds the back side of the print medium P1 to the back side of the print medium P1, and the adhesive part 50a illustrated in Fig. 4A bonds a first side area of the triangular portion 36 in the medium transverse direction to a second side area of the triangular portion 36. The "flat" means that the print medium P1 has no projections or recesses.

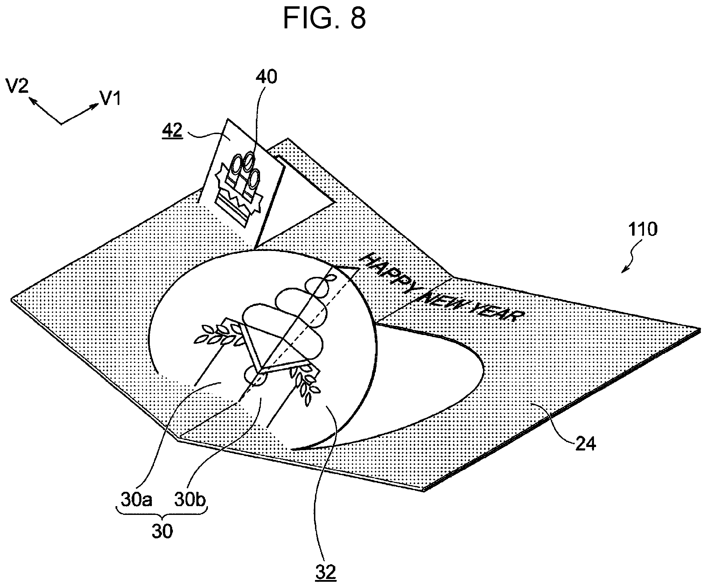

By opening the four-folded print medium P1, the blank area 32 having the first pop-up image portion 30, which is a three-dimensional part where the first pop-up image portion 30a and the first pop-up image portion 30b are integrated, is raised from the color area 24 as illustrated in Fig. 8. The first pop-up image portion 30 is an example three-dimensional part.

The blank area 42 having the second pop-up image portion 40, which is a three-dimensional part, formed therein is raised from the color area 24. The adhesive part 50c illustrated in Fig. 4B bonds the blank area 42 to the back side of the print medium P1. The adhesive part 50c has weaker adhesive force than the adhesive part 50b. The blank area 42 having the second pop-up image portion 40 formed therein is thus released from the back side of the print medium P1 and raised from the color area 24. The second pop-up image portion 40 is an example three-dimensional part.

A three-dimensional object 110 having a three-dimensional part is accordingly produced by using the print medium P1.

In the method for producing the three-dimensional object 110, as described above, the adhesive part forming step involves forming the adhesive part 50 on part of the print medium P1 in the image forming apparatus 100 using the pressure-induced phase transition resin toner. This step eliminates or reduces variations in the shape of the three-dimensional part generated by variations in the position of the adhesive part compared with a case where the adhesive part is formed on a portion of the print medium by using a spray or other methods.

In the method for producing the three-dimensional object 110, the adhesive part forming step involves forming the image 20 on the print medium P1. In other words, the image forming apparatus 100 forms the adhesive part 50 and the image 20 on the print medium P1 in the adhesive part forming step. This step eliminates or reduces variations in relative position between the adhesive part 50 and the image 20 compared with a case where an adhesive part and an image are formed on a print medium in different steps.

In the method for producing the three-dimensional object 110, the adhesive parts 50a and 50b have stronger adhesive force than the adhesive part 50c. The adhesive parts 50a and 50b and the adhesive part 50c correspond to areas that require strong adhesive force and an area that requires weak adhesive force.

In the method for producing the three-dimensional object 110, the adhesive force is varied by making the toner concentration of the adhesive parts 50a and 50b higher than the toner concentration of the adhesive part 50c. This reduces the number of types of toner compared with a case where the adhesive force is varied by changing the type of toner. The "toner concentration" is the amount of toner per unit area of the print medium P1.

In the three-dimensional part forming step in the method for producing the three-dimensional object 110, pressing the print medium P1 having a flat shape bonds the back side of the print medium P1 to the back side of the print medium P1 and bonds a first side area of the triangular portion 36 in the medium transverse direction to a second side area of the triangular portion 36. In this step, the back side of the print medium P1 is easily bonded to the back side of the print medium P1, and a first side area of the triangular portion 36 in the medium transverse direction is easily bonded to a second side area of the triangular portion 36, compared with a case where pressing a print medium having projections or recesses bonds the portion of the print medium that has the adhesive part formed thereon to a different portion of the print medium.

### <Second Exemplary Embodiment>

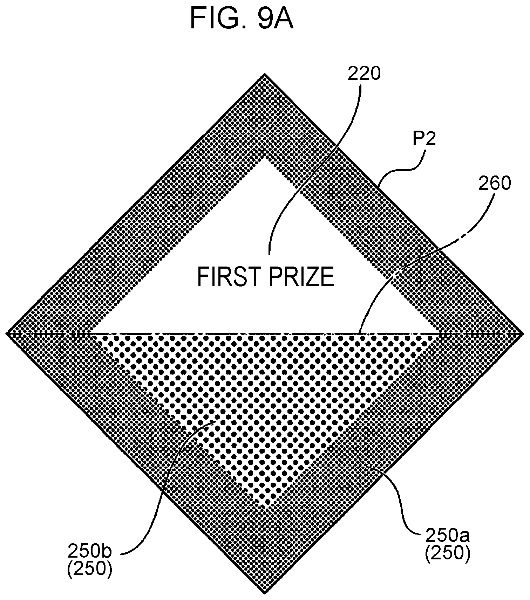

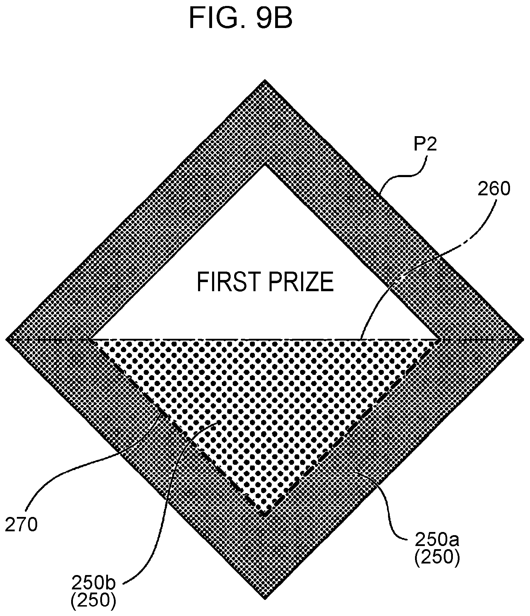

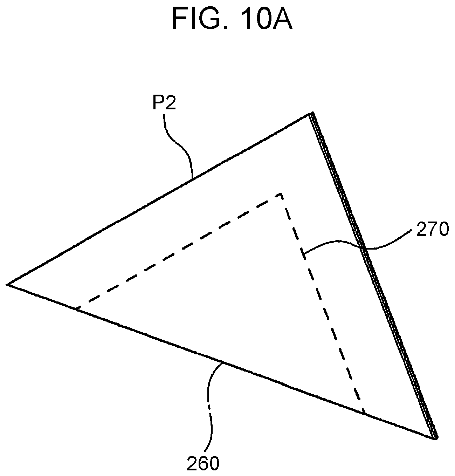

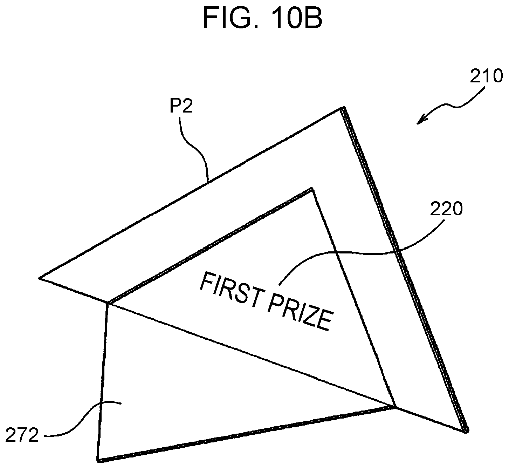

An example method for producing a three-dimensional object according to a second exemplary embodiment of the present invention will be described with reference to Fig. 9A, Fig. 9B, Fig. 10A, and Fig. 10B. Different parts of the second exemplary embodiment from the first exemplary embodiment will be mainly described. With regard to the method for producing a three-dimensional object according to the second exemplary embodiment, the adhesive part forming step and the three-dimensional part forming step will be described separately.

### (Adhesive Part Forming Step)

Referring to Fig. 9A, the adhesive part forming step involves forming an image 220 and an adhesive part 250 on a rectangular print medium P2. Specifically, the adhesive part 250 includes an adhesive part 250a and an adhesive part 250b. The adhesive part 250a is an example first adhesive part, and the adhesive part 250b is an example second adhesive part.

The adhesive part 250a is formed along the outer edge of the print medium P2 so as to have a predetermined width. In other words, the adhesive part 250a is formed in outer peripheral portions of the print medium P2. In a rectangular region surrounded by the adhesive part 250a, the adhesive part 250b is formed in a triangular region on one side of a boundary 260 connecting opposite corners. The adhesive part 250b has weaker adhesive force than the adhesive part 250a. In other words, the adhesive part 250a has stronger adhesive force than the adhesive part 250b.

In a rectangular region surrounded by the adhesive part 250a, the image 220, which is a letter image indicating "FIRST PRIZE", is formed in a region on the opposite side of the boundary 260 from the adhesive part 250b.

### (Three-Dimensional Part Forming Step)

Referring to Fig. 9B, the three-dimensional part forming step involves forming a perforation 270 on part of the edge of the adhesive part 250b. Specifically, the perforation 270 is formed on an edge of the adhesive part 250b that faces the adhesive part 250a. The perforation 270 may be formed by, for example, using a perforation cutter.

Next, referring to Fig. 10A, the print medium P2 is folded in two at the boundary 260 so as to hide the image 220. Furthermore, the outer peripheral portions of the print medium P2 are bonded together with the adhesive part 250a illustrated in Fig. 9A by pressing the entire print medium P2. Furthermore, a portion of the print medium P2 that has the image 220 formed thereon is bonded to the adhesive part 250b with the adhesive part 250b illustrated in Fig. 9A.

As illustrated in Fig. 10A and Fig. 10B, a region portion 272 that is a three-dimensional part and surrounded by the perforation 270 is cut and raised along the perforation 270. The image 220 is thus exposed to the outside. The region portion 272 is an example three-dimensional part.

A three-dimensional object 210 having a three-dimensional part is accordingly produced by using the print medium P2.

### <Third Exemplary Embodiment>

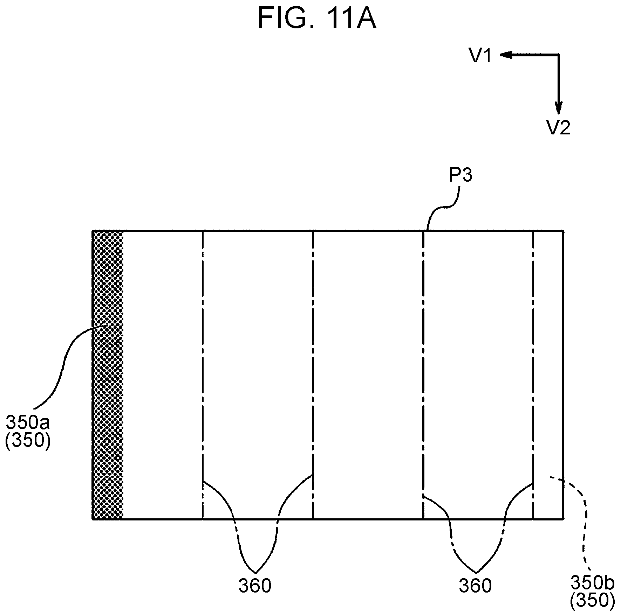

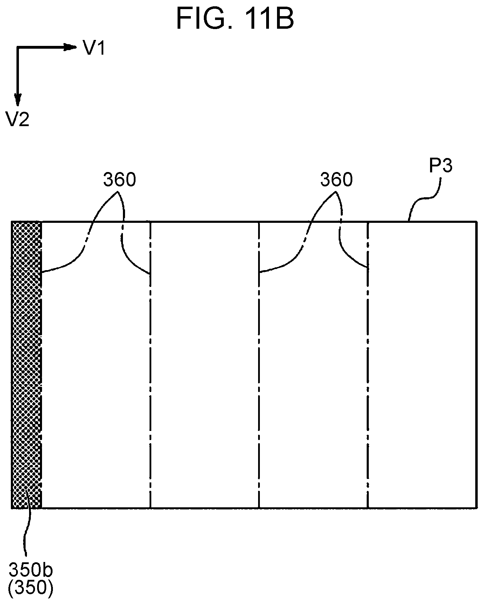

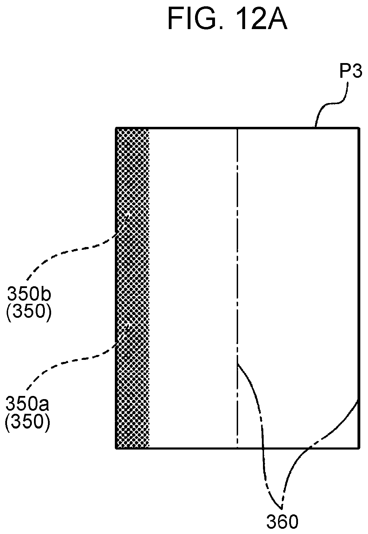

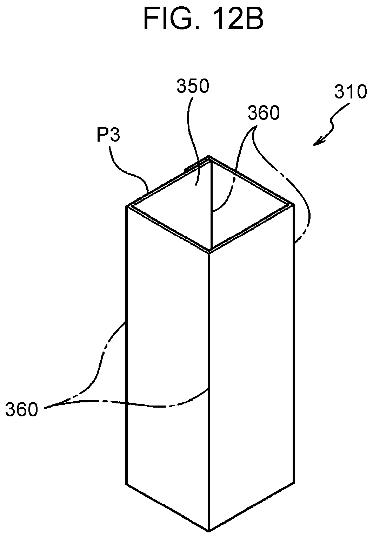

An example method for producing a three-dimensional object according to a third exemplary embodiment of the present invention will be described with reference to Fig. 11A, Fig. 11B, Fig. 12A, and Fig. 12B. Different parts of the third exemplary embodiment from the first exemplary embodiment will be mainly described. With regard to the method for producing a three-dimensional object according to the third exemplary embodiment, the adhesive part forming step and the three-dimensional part forming step will be described separately.

### (Adhesive Part Forming Step)

Referring to Fig. 11A and Fig. 11B, the adhesive part forming step involves forming an adhesive part 350 on part of the front side and part of the back side of a print medium P3 having a rectangular shape elongating in the left-right direction in the figure.

Referring to Fig. 11A, the adhesive part 350 (hereinafter "adhesive part 350a") is formed on the front side of the print medium P3. Specifically, the adhesive part 350a is formed on a first side of the print medium P3 in the medium longitudinal direction so as to extend in the medium transverse direction.

Referring to Fig. 11B, the adhesive part 350 (hereinafter "adhesive part 350b") is formed on the back side of the print medium P3. Specifically, the adhesive part 350b is formed on a second side of the print medium P3 in the medium longitudinal direction so as to extend in the medium transverse direction, as illustrated in Fig. 11B. The adhesive part 350b has the same width as the adhesive part 350a.

### (Three-Dimensional Part Forming Step)

Referring to Fig. 11A and Fig. 11B, the three-dimensional part forming step involves forming four fold lines extending in the medium transverse direction.

Specifically, as the print medium P3 is viewed from the front, fold lines for mountain folds as viewed from the front side are formed on virtual lines 360 that divide a part of the print medium P3 other than the adhesive part 350b into four equal parts in the medium longitudinal direction.

Furthermore, referring to Fig. 12A, the print medium P3 is folded in two such that the adhesive part 350a overlaps the adhesive part 350b. By pressing the print medium P3, a portion of the print medium P3 that has the adhesive part 350a formed thereon is bonded to a portion of the print medium P3 that has the adhesive part 350b formed thereon.

Furthermore, referring to Fig. 12B, the two-folded print medium P3 is opened to form a space inside, whereby the print medium P3 is formed into a quadrangular prism shape. A three-dimensional object 310 is accordingly produced by using the print medium P3. The three-dimensional object 310 having a quadrangular prism shape is an example three-dimensional part.

### <Fourth Exemplary Embodiment>

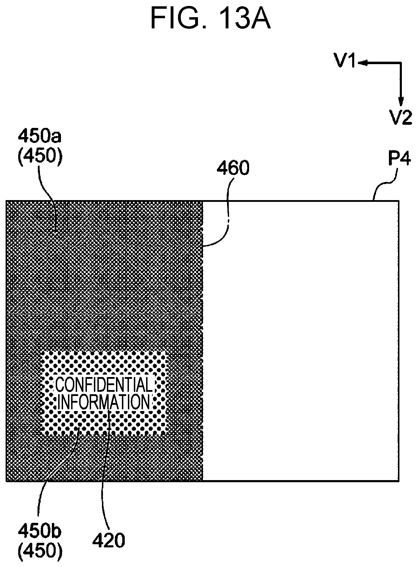

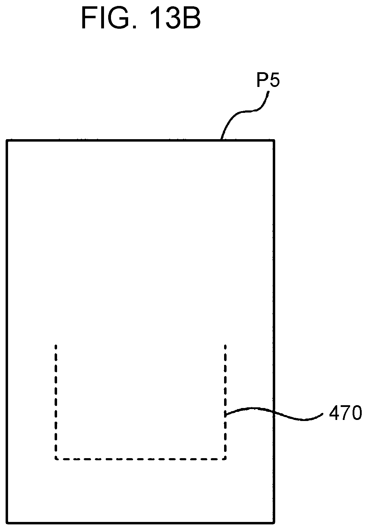

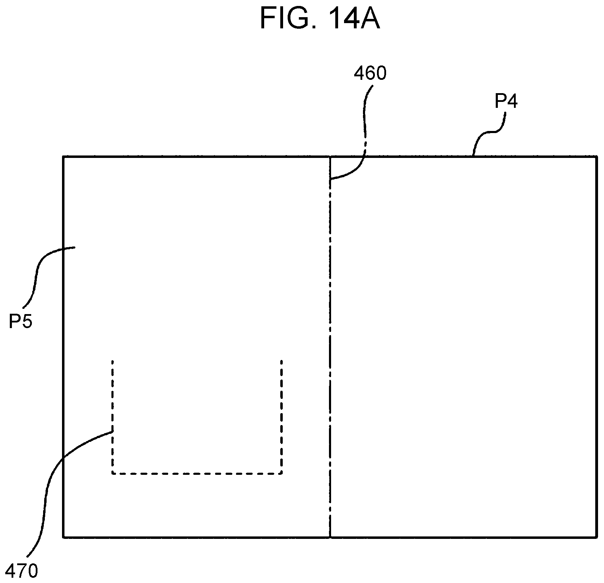

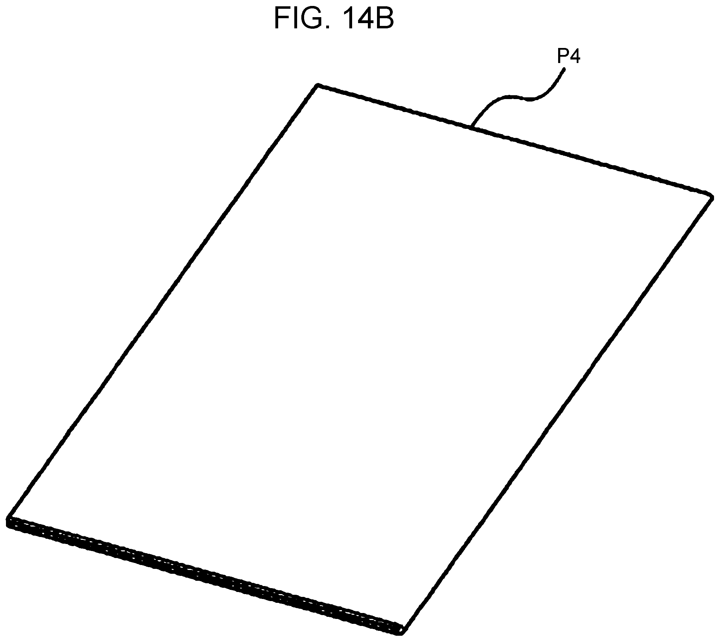

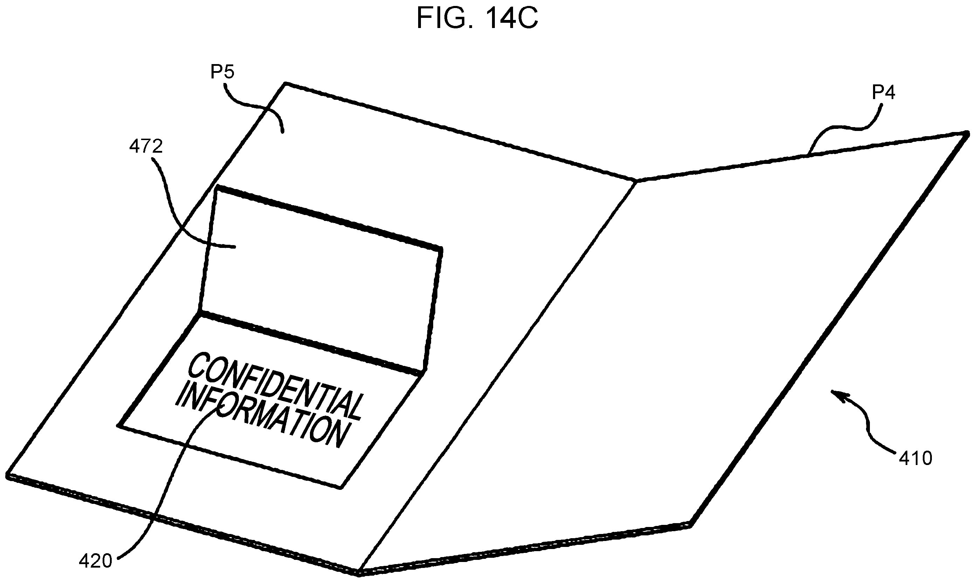

An example method for producing a three-dimensional object according to a fourth exemplary embodiment of the present invention will be described with reference to Fig. 13A, Fig. 13B, Fig. 14A, Fig. 14B, and Fig. 14C. Different parts of the fourth exemplary embodiment from the first exemplary embodiment will be mainly described. With regard to the method for producing a three-dimensional object according to the fourth exemplary embodiment, the adhesive part forming step and the three-dimensional part forming step will be described separately. In the method for producing a three-dimensional object according to the fourth exemplary embodiment, a print medium P4 and a print medium P5 are used. Referring to Fig. 13A, the print medium P4 has a rectangular shape elongating in the left-right direction in the figure. Referring to Fig. 13B, the print medium P5 has a rectangular shape elongating in the up-down direction in the figure and has the same shape as a shape formed by folding the print medium P4 in two in the medium longitudinal direction.

### (Adhesive Part Forming Step)

Referring to Fig. 13A, the adhesive part forming step involves forming an adhesive part 450 and an image 420 on the print medium P4.

Specifically, the adhesive part 450 is formed in a first side area from a boundary 460 that divides the print medium P4 into two in the medium longitudinal direction. The adhesive part 450 includes an adhesive part 450a and an adhesive part 450b having weaker adhesive force than the adhesive part 450a. The adhesive part 450a is an example first adhesive part, and the adhesive part 450b is an example second adhesive part.

The adhesive part 450b having a rectangular shape elongating in the medium longitudinal direction is formed on a first side (lower side in figure) in the medium transverse direction. The adhesive part 450a is formed in an area other than an adhesive part 40b so as to surround the adhesive part 450b.

The image 420, which is a letter image indicating "CONFIDENTIAL INFORMATION", is formed in the adhesive part 450b.

### (Three-Dimensional Part Forming Step)

Referring to Fig. 13B, the three-dimensional part forming step involves forming a perforation 470 in the print medium P5. Specifically, the perforation 470 is formed in the print medium P5 so as to overlap both the left and right edges of the adhesive part 450b and the lower edge of the adhesive part 450b when the print medium P5 is superimposed on a portion of the print medium P4 that has the adhesive part 450 formed thereon.

Furthermore, referring to Fig. 14A, the print medium P5 is superimposed on a portion of the print medium P4 that has the adhesive part 450 formed thereon.

Referring to Fig. 14B, the print medium P4 is folded in two at the boundary 460 so as to hide the perforation 470. Furthermore, by pressing the entire print medium P4 in this state, the print medium P5 is bonded to the print medium P4 with the adhesive part 450 illustrated in Fig. 13A.

As illustrated in Fig. 14C, the two-folded print medium P4 is opened, and a region portion 472 that is a three-dimensional part and surrounded by the perforation 470 is cut and raised along the perforation 470. The region portion 472 is an example three-dimensional part.

A three-dimensional object 410 having a three-dimensional part is accordingly produced by using the print media P4 and P5.

### <Fifth Exemplary Embodiment>

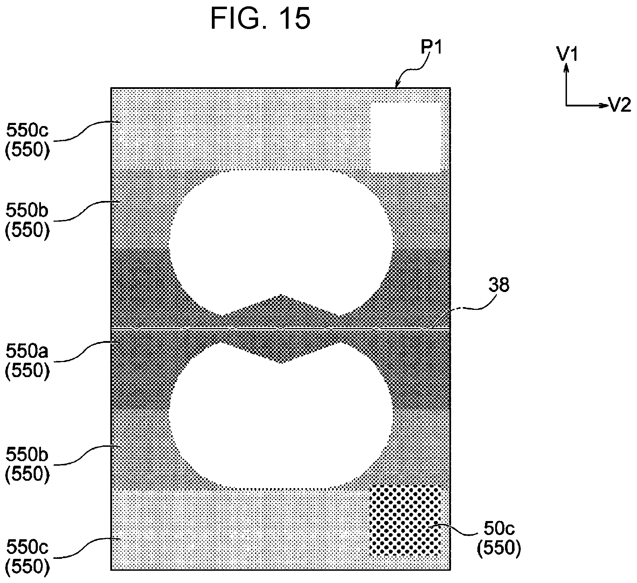

An example method for producing a three-dimensional object according to a fifth exemplary embodiment of the present invention will be described with reference to Fig. 15. Different parts of the fifth exemplary embodiment from the first exemplary embodiment will be mainly described.

Referring to Fig. 15, the adhesive part forming step according to the fifth exemplary embodiment involves forming an adhesive part 550 on the back side of the print medium P1.

The adhesive part 550 includes an adhesive part 550a, adhesive parts 550b, adhesive parts 550c, and an adhesive part 50c. The adhesive part 550a is an example first adhesive part, and the adhesive parts 550c are example second adhesive parts.

Specifically, the adhesive part 550a is formed in a central area in the medium longitudinal direction so as to extend in the medium transverse direction. Furthermore, a pair of the adhesive parts 550b extending in the medium transverse direction are formed so as to sandwich the adhesive part 550a in the medium longitudinal direction. A pair of the adhesive parts 550c extending in the medium transverse direction are formed so as to sandwich a pair of the adhesive parts 550b in the medium longitudinal direction.

The adhesive force increases stepwise in order of the adhesive parts 550c, the adhesive parts 550b, and the adhesive part 550a. In other words, the adhesive part 550a closest to the boundary 38 at the center in the medium longitudinal direction has stronger adhesive force than the adhesive parts 550c and 550b, and the adhesive parts 550c furthest from the boundary 38 have weaker adhesive force than the adhesive parts 550a and 550b. In other words, the adhesive force is strong in the adhesive part 550a which is close to the boundary 38, at which the print medium P1 is folded in the three-dimensional part forming step, and on which a strong peel force acts, and the adhesive force is weak in the adhesive parts 550c which are away from the boundary 38 and on which a weak peel force acts. The adhesive parts 550b sandwiched between the adhesive part 550a and the adhesive parts 550c have moderate adhesive force.

In the method for producing a three-dimensional object, moderate adhesive force between strong adhesive force and week adhesive force is thus given in required areas.

### <Sixth Exemplary Embodiment>

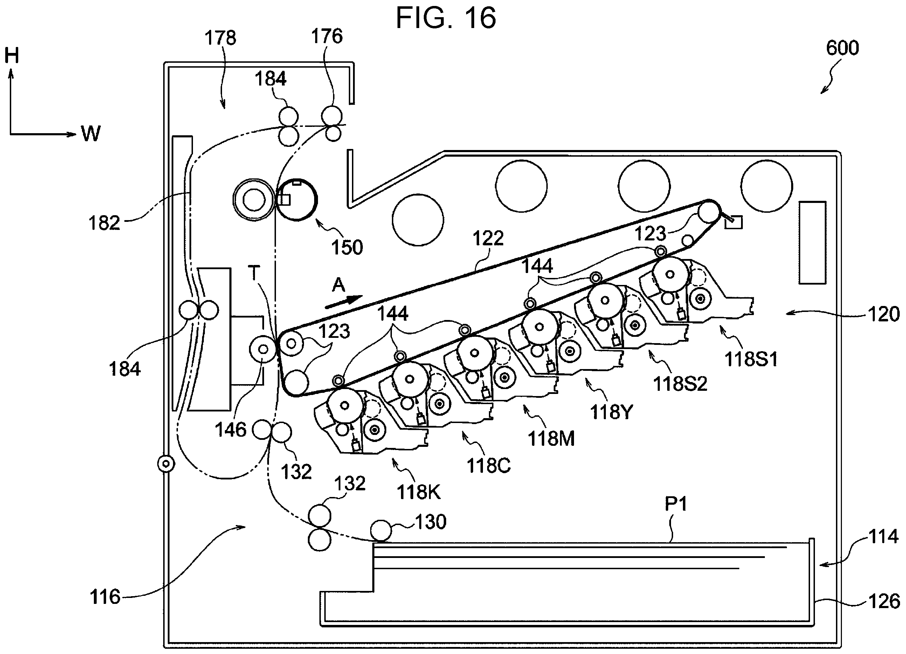

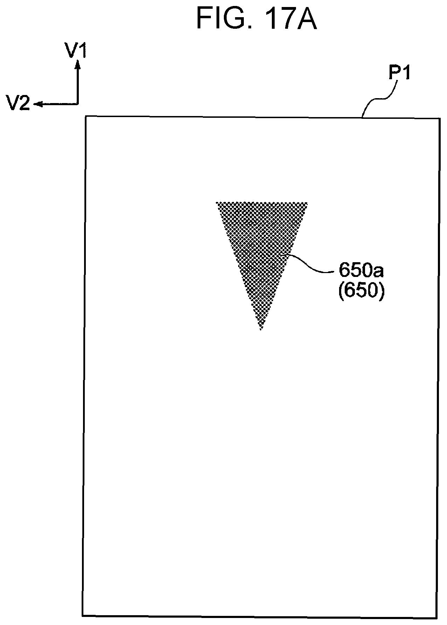

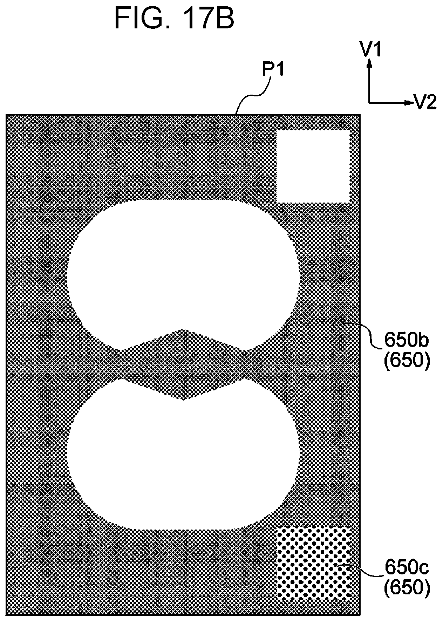

An example method for producing a three-dimensional object according to a sixth exemplary embodiment of the present invention will be described with reference to Fig. 16, Fig. 17A, and Fig. 17B. Different parts of the sixth exemplary embodiment from the first exemplary embodiment will be mainly described.

In the adhesive part forming step according to the sixth exemplary embodiment, an image forming apparatus 600 illustrated in Fig. 16 is used. A forming section 120 in the image forming apparatus 600 includes six forming units 118Y, 118M, 118C, 118K, 118S1, and 118S2 for yellow (Y), magenta (M), cyan (C), black (K), first adhesive (S1), and second adhesive (S2).

An adhesive part 650 formed by the forming unit 118S1 is different in color from an adhesive part 650 formed by the forming unit 118S2. In other words, the adhesive part 650 formed by the forming unit 118S1 can be visually distinguished from the adhesive part 650 formed by the forming unit 118S2.

Specifically, referring to Fig. 17A, the adhesive part 650 having a triangular shape (hereinafter "adhesive part 650a") is formed on the front side of a print medium P1. The adhesive part 650a is formed by the forming unit 118S1. Specifically, referring to Fig. 17B, the adhesive part 650 (hereinafter "adhesive part 650b") and the adhesive part 650 (hereinafter "adhesive part 650c") surrounded by the adhesive part 650b are formed on the back side of the print medium P1. The adhesive parts 650b and 650c are formed by the forming unit 118S2. The adhesive part 650a and the adhesive part 650b are example first adhesive parts, and the adhesive part 650c is an example second adhesive part.

When the adhesive part 650a formed on the front side of the print medium P1 is different in color from the adhesive parts 650b and 650c formed on the back side, it is easier to extract defective products on the basis of difference in color between the front side and the back side during the process compared with a case where the front side and the back side of the print medium P1 have the same color in the adhesive parts.

### [Pressure-Induced Phase Transition Resin Toner]

Hereinafter, a pressure-induced phase transition resin toner used in the adhesive part forming step (hereinafter referred to simply as a "pressure-induced phase transition resin toner") in the exemplary embodiments will be described.

The pressure-induced phase transition resin toner includes: a styrene-based resin containing styrene and a vinyl monomer other than styrene as polymer components; and a (meth)acrylate-based resin containing at least two (meth)acrylates as polymer components. The mass percentage of the (meth)acrylates relative to the total mass of the polymer components of the (meth)acrylate-based resin is 90 mass% or more. The pressure-induced phase transition resin toner preferably has at least two glass transition temperatures, and a difference between the lowest glass transition temperature and the highest glass transition temperature is preferably 30°C or more.

The pressure-induced phase transition resin toner undergoes phase transition under pressure when the pressure-induced phase transition resin toner exhibits the following thermal properties: "having at least two glass transition temperatures, wherein a difference between the lowest glass transition temperature and the highest glass transition temperature is 30°C or more". In the present disclosure, the pressure-induced phase transition resin toner that undergoes phase transition under pressure means a pressure-induced phase transition resin toner that satisfies Formula 1 below.${10}^{∘} C \leq T 1 - T 2$

In Formula 1, T1 is a temperature corresponding to a viscosity of 10,000 Pa·s at a pressure of 1 MPa, and T2 is a temperature corresponding to a viscosity of 10,000 Pa·s at a pressure of 10 MPa. The temperature T1 and the temperature T2 are determined as described below.

When the pressure-induced phase transition resin toner includes a "styrene-based resin containing styrene and a vinyl monomer other than styrene as polymer components" and a "(meth)acrylate-based resin containing at least two (meth)acrylates as polymer components, wherein the mass percentage of the (meth)acrylates relative to the total mass of the polymer components of the (meth)acrylate-based resin is 90 mass% or more", the pressure-induced phase transition resin toner easily undergoes phase transition under pressure and exhibits good adhesion. As a result, the adhesive parts have high adhesion. The mechanism for this may be as described below.

Since the styrene-based resin normally has low compatibility with the (meth)acrylate-based resin, these resins may be present in the phase-separated state in pressure-induced phase transition resin toner particles. When the pressure-induced phase transition resin toner particles are pressed, the (meth)acrylate-based resin, which has a relatively low glass transition temperature, may be first fluidized, and the fluidization may affect the styrene-based resin to fluidize both of the resins. These resins in the pressure-induced phase transition resin toner particles may form the phase-separated state again because of low compatibility when both of the resins are fluidized under pressure and then solidified under reduced pressure to form a resin layer.

The (meth)acrylate-based resin containing at least two (meth)acrylates as polymer components has at least two types of ester groups bonded to the main chain and thus shows a lower degree of molecular alignment in the solid state than a resin containing a (meth)acrylate homopolymer, which may easily cause fluidization under pressure. When the mass percentage of the (meth)acrylates relative to the total mass of the polymer components is 90 mass% or more, at least two types of ester groups are densely present, and the degree of molecular alignment in the solid state is low, which may easily cause fluidization under pressure. Therefore, the pressure-induced phase transition resin toner according to the exemplary embodiment may be more easily fluidized under pressure, that is, more easily undergo phase transition under pressure, than a pressure-induced phase transition resin toner containing a (meth)acrylate homopolymer as a (meth)acrylate-based resin.

The (meth)acrylate-based resin containing at least two (meth)acrylates as polymer components where the mass percentage of the (meth)acrylates relative to the total mass of the polymer components is 90 mass% or more also shows, when solidified again, a low degree of molecular alignment and may thus show fine phase separation from the styrene-based resin. The finer the phase separation state between the styrene-based resin and the (meth)acrylate-based resin, the more uniform the adhesive surface against an adherend, and the better the adhesion. Therefore, the pressure-induced phase transition resin toner according to the exemplary embodiment may have better adhesion than a pressure-induced phase transition resin toner containing a (meth)acrylate homopolymer as a (meth)acrylate-based resin.

The components, configuration, and features of the pressure-induced phase transition resin toner will be described below in detail. In the following description, unless otherwise specified, the term "styrene-based resin" refers to a "styrene-based resin containing styrene and a vinyl monomer other than styrene as polymer components," and the term "(meth)acrylate-based resin" refers to a "(meth)acrylate-based resin containing at least two (meth)acrylates as polymer components, wherein the mass percentage of the (meth)acrylates relative to the total mass of the polymer components of the (meth)acrylate-based resin is 90 mass% or more".

The pressure-induced phase transition resin toner contains at least pressure-induced phase transition resin toner particles and, as desired, external additives.

### (Pressure-Induced Phase Transition Resin Toner Particles)

The pressure-induced phase transition resin toner particles contain at least a styrene-based resin and a (meth)acrylate-based resin. The pressure-induced phase transition resin toner particles may contain a colorant, a release agent, and other additives.

In the pressure-induced phase transition resin toner particles, the amount of the styrene-based resin is preferably larger than the amount of the (meth)acrylate-based resin in order to keep adhesion. The amount of the styrene-based resin relative to the total amount of the styrene-based resin and the (meth)acrylate-based resin is preferably 55 mass% or more and 80 mass% or less, more preferably 60 mass% or more and 75 mass% or less, still more preferably 65 mass% or more and 70 mass% or less.

### -Styrene-Based Resin-

The pressure-induced phase transition resin toner particles constituting the pressure-induced phase transition resin toner includes a styrene-based resin containing styrene and a vinyl monomer other than styrene as polymer components.

The mass percentage of styrene relative to the total mass of the polymer components of the styrene-based resin is preferably 60 mass% or more, more preferably 70 mass% or more, still more preferably 75 mass% or more in order to prevent or reduce fluidization of the pressure-induced phase transition resin toner under no pressure, and preferably 95 mass% or less, more preferably 90 mass% or less, still more preferably 85 mass% or less in order to form the pressure-induced phase transition resin toner that easily undergoes phase transition under pressure.

Examples of the vinyl monomer other than styrene in the styrene-based resin include styrenic monomers other than styrene, and acrylic monomers.

Examples of the styrenic monomers other than styrene include alkyl-substituted styrenes; aryl-substituted styrenes; alkoxy-substituted styrenes; halogen-substituted styrenes; and nitro-substituted styrenes. The styrenic monomers may be used alone or in combination of two or more.

The acrylic monomer is preferably at least one acrylic monomer selected from the group consisting of (meth)acrylic acid and (meth)acrylates. Examples of (meth)acrylates include alkyl (meth)acrylates, carboxy-substituted alkyl (meth)acrylates, hydroxy-substituted alkyl (meth)acrylates, alkoxy-substituted alkyl (meth)acrylates, and di(meth)acrylates. The acrylic monomer may be used alone or in combination of two or more.

Examples of the vinyl monomer other than styrene in the styrene-based resin include, in addition to styrenic monomers and acrylic monomers, (meth)acrylonitrile; vinyl ethers; vinyl ketones; and olefins.

To form the pressure-induced phase transition resin toner that easily undergoes phase transition under pressure, the styrene-based resin preferably contains a (meth)acrylate as a polymer component, more preferably contains an alkyl (meth)acrylate as a polymer component, still more preferably contains an alkyl (meth)acrylate with a C2-C10 alkyl group, yet still more preferably contains an alkyl (meth)acrylate with a C4-C8 alkyl group, yet still more preferably contains at least one of n-butyl acrylate and 2-ethylhexyl acrylate. To form the pressure-induced phase transition resin toner that easily undergoes phase transition under pressure, the styrene-based resin and the (meth)acrylate-based resin preferably contain the same (meth)acrylate as a polymer component.

The mass percentage of (meth)acrylate relative to the total mass of the polymer components of the styrene-based resin is preferably 40 mass% or less, more preferably 30 mass% or less, still more preferably 25 mass% or less in order to prevent or reduce fluidization of the pressure-induced phase transition resin toner under no pressure, and preferably 5 mass% or more, more preferably 10 mass% or more, still more preferably 15 mass% or more in order to form the pressure-induced phase transition resin toner that easily undergoes phase transition under pressure. The (meth)acrylate is preferably an alkyl (meth)acrylate, more preferably an alkyl (meth)acrylate with a C2-C10 alkyl group, more preferably an alkyl (meth)acrylate with a C4-C8 alkyl group.

The styrene-based resin particularly preferably contains at least one of n-butyl acrylate and 2-ethylhexyl acrylate as a polymer component. The total amount of n-butyl acrylate and 2-ethylhexyl acrylate relative to the total amount of the polymer components of the styrene-based resin is preferably 40 mass% or less, more preferably 30 mass% or less, still more preferably 25 mass% or less in order to prevent or reduce fluidization of the pressure-induced phase transition resin toner under no pressure, and preferably 5 mass% or more, more preferably 10 mass% or more, still more preferably 15 mass% or more in order to form the pressure-induced phase transition resin toner that easily undergoes phase transition under pressure.

The weight-average molecular weight of the styrene-based resin is preferably 3,000 or more, more preferably 4,000 or more, still more preferably 5,000 or more in order to prevent or reduce fluidization of the pressure-induced phase transition resin toner under no pressure, and preferably 60,000 or less, more preferably 55,000 or less, still more preferably 50,000 or less in order to form the pressure-induced phase transition resin toner that easily undergoes phase transition under pressure.

The weight-average molecular weights of the resins are measured by gel permeation chromatography (GPC). The measurement of the molecular weights by GPC is carried out by using HLC-8120GPC available from Tosoh Corporation as a GPC system, TSKgel SuperHM-M (15 cm) available from Tosoh Corporation as a column, and tetrahydrofuran as a solvent. The weight-average molecular weights of the resins are calculated from molecular weight calibration curves made by using a monodisperse polystyrene standard.

The glass transition temperature of the styrene-based resin is preferably 30°C or higher, more preferably 40°C or higher, still more preferably 50°C or higher in order to prevent or reduce fluidization of the pressure-induced phase transition resin toner under no pressure, and preferably 110°C or lower, more preferably 100°C or lower, still more preferably 90°C or lower in order to form the pressure-induced phase transition resin toner that easily undergoes phase transition under pressure.

The glass transition temperatures of the resins are determined from differential scanning calorimetry curves (DSC curves) obtained by differential scanning calorimetry (DSC). More specifically, the glass transition temperature is determined in accordance with "extrapolated glass transition onset temperature" described in the method for determining a glass transition temperature in "Testing Methods for Transition Temperatures of Plastics" in JIS K7121:1987.

The glass transition temperature of each resin can be controlled with the type and polymerization ratio of polymer components. The glass transition temperature tends to decrease as the density of flexible units, such as methylene groups, ethylene groups, and oxyethylene groups in the main chain increases, and tends to increase as the density of rigid units, such as aromatic rings and cyclohexane rings, in the main chain increases. The glass transition temperature tends to decrease as the density of aliphatic groups in the side chains increases.

The mass percentage of the styrene-based resin relative to the total mass of the pressure-induced phase transition resin toner particles is preferably 55 mass% or more, more preferably 60 mass% or more, still more preferably 65 mass% or more in order to prevent or reduce fluidization of the pressure-induced phase transition resin toner under no pressure, and preferably 80 mass% or less, more preferably 75 mass% or less, still more preferably 70 mass% or less in order to form the pressure-induced phase transition resin toner that easily undergoes phase transition under pressure.

### -(Meth)acrylate-Based Resin-

The pressure-induced phase transition resin toner particles constituting the pressure-induced phase transition resin toner include a (meth)acrylate-based resin containing at least two (meth)acrylates as polymer components, wherein the mass percentage of the (meth)acrylates relative to the total mass of the polymer components of the (meth)acrylate-based resin is 90 mass% or more.

The mass percentage of the (meth)acrylate relative to the total mass of the polymer components of the (meth)acrylate-based resin is 90 mass% or more, more preferably 95 mass% or more, still more preferably 98 mass% or more, yet still more preferably 100 mass%.

Examples of (meth)acrylates include alkyl (meth)acrylates, carboxy-substituted alkyl (meth)acrylates, hydroxy-substituted alkyl (meth)acrylates, alkoxy-substituted alkyl (meth)acrylates, and di(meth)acrylates.

The (meth)acrylates may be used alone or in combination of two or more.

To form the pressure-induced phase transition resin toner that easily undergoes phase transition under pressure and has good adhesion, the (meth)acrylate is preferably an alkyl (meth)acrylate, more preferably an alkyl (meth)acrylate with a C2-C10 alkyl group, still more preferably an alkyl (meth)acrylate with a C4-C8 alkyl group, yet still more preferably n-butyl acrylate or 2-ethylhexyl acrylate. To form the pressure-induced phase transition resin toner that easily undergoes phase transition under pressure, the styrene-based resin and the (meth)acrylate-based resin preferably contain the same (meth)acrylate as a polymer component.

The mass percentage of the alkyl (meth)acrylate relative to the total mass of the polymer components of the (meth)acrylate-based resin is preferably 90 mass% or more, more preferably 95 mass% or more, still more preferably 98 mass% or more, yet still more preferably 100 mass% in order to form the pressure-induced phase transition resin toner that easily undergoes phase transition under pressure and has good adhesion. The alkyl (meth)acrylate is preferably an alkyl (meth)acrylate with a C2-C10 alkyl group, more preferably an alkyl (meth)acrylate with a C4-C8 alkyl group.

The mass ratio of two (meth)acrylates present at the highest two mass percentages among at least two (meth)acrylates contained as polymer components in the (meth)acrylate-based resin is preferably 80:20 to 20:80, more preferably 70:30 to 30:70, still more preferably 60:40 to 40:60 in order to form the pressure-induced phase transition resin toner that easily undergoes phase transition under pressure and has good adhesion.

Two (meth)acrylates present at the highest two mass percentages among at least two (meth)acrylates contained as polymer components in the (meth)acrylate-based resin are preferably alkyl (meth)acrylates. The alkyl (meth)acrylates are preferably alkyl (meth)acrylates with a C2-C10 alkyl group, more preferably alkyl (meth)acrylates with a C4-C8 alkyl group.

When two (meth)acrylates present at the highest two mass percentages among at least two (meth)acrylates contained as polymer components in the (meth)acrylate-based resin are alkyl (meth)acrylates, a difference in number of carbon atoms between the alkyl groups of the two alkyl (meth)acrylates is preferably 1 or more and 4 or less, more preferably 2 or more and 4 or less, still more preferably 3 or 4 in order to form the pressure-induced phase transition resin toner that easily undergoes phase transition under pressure and has good adhesion.

To form the pressure-induced phase transition resin toner that easily undergoes phase transition under pressure and has good adhesion, the (meth)acrylate-based resin preferably contains n-butyl acrylate and 2-ethylhexyl acrylate as polymer components, and two (meth)acrylates present at the highest two mass percentages among at least two (meth)acrylates contained as polymer components in the (meth)acrylate-based resin are more preferably n-butyl acrylate and 2-ethylhexyl acrylate. The total amount of n-butyl acrylate and 2-ethylhexyl acrylate relative to the total amount of the polymer components of the (meth)acrylate-based resin is preferably 90 mass% or more, more preferably 95 mass% or more, still more preferably 98 mass% or more, yet still more preferably 100 mass%.

The (meth)acrylate-based resin may contain, as a polymer component, a vinyl monomer other than (meth)acrylates. Examples of the vinyl monomer other than (meth)acrylates include (meth)acrylic acid; styrene; styrenic monomers other than styrene; (meth)acrylonitrile; vinyl ethers, such as vinyl methyl ether and vinyl isobutyl ether; vinyl ketones, such as vinyl methyl ketone, vinyl ethyl ketone, and vinyl isopropenyl ketone; and olefins, such as isoprene, butene, and butadiene. These vinyl monomers may be used alone or in combination of two or more.

When the (meth)acrylate-based resin contains a vinyl monomer other than (meth)acrylates as a polymer component, the vinyl monomer other than (meth)acrylates is preferably at least one of acrylic acid and methacrylic acid, more preferably acrylic acid.

The weight-average molecular weight of the (meth)acrylate-based resin is preferably 50,000 or more, more preferably 100,000 or more, still more preferably 120,000 or more, yet still more preferably 150,000 or more in order to prevent or reduce fluidization of the pressure-induced phase transition resin toner under no pressure, and preferably 250,000 or less, more preferably 220,000 or less, still more preferably 200,000 or less in order to form the pressure-induced phase transition resin toner that easily undergoes phase transition under pressure.

The glass transition temperature of the (meth)acrylate-based resin is preferably 10°C or lower, more preferably 0°C or lower, still more preferably -10°C or lower in order to form the pressure-induced phase transition resin toner that easily undergoes phase transition under pressure, and preferably -90°C or higher, more preferably -80°C or higher, still more preferably -70°C or higher in order to prevent or reduce fluidization of the pressure-induced phase transition resin toner under no pressure.

The mass percentage of the (meth)acrylate-based resin relative to the total mass of the pressure-induced phase transition resin toner particles is preferably 20 mass% or more, more preferably 25 mass% or more, still more preferably 30 mass% or more in order to form the pressure-induced phase transition resin toner that easily undergoes phase transition under pressure, and preferably 45 mass% or less, more preferably 40 mass% or less, still more preferably 35 mass% or less in order to prevent or reduce fluidization of the pressure-induced phase transition resin toner under no pressure.

The total amount of the styrene-based resin and the (meth)acrylate-based resin contained in the pressure-induced phase transition resin toner particles is preferably 70 mass% or more, more preferably 80 mass% or more, still more preferably 90 mass% or more, yet still more preferably 95 mass% or more, yet still more preferably 100 mass% relative to the total mass of the pressure-induced phase transition resin toner particles.

### -Other Resins-

Examples of the pressure-induced phase transition resin toner particles include polystyrene; and non-vinyl resins, such as epoxy resins, polyester resins, polyurethane resins, polyamide resins, cellulose resins, polyether resins, and modified rosins. These resins may be used alone or in combination of two or more.

### -Various Additives-

The pressure-induced phase transition resin toner particles may contain, as desired, colorants (e.g., pigments, dyes), release agents (e.g., hydrocarbon waxes; natural waxes, such as carnauba wax, rice wax, and candelilla wax; synthetic or mineral and petroleum waxes, such as montan wax; and ester waxes, such as waxes of fatty acid esters and montanic acid esters), and charge control agents.

When the pressure-induced phase transition resin toner is a transparent pressure-induced phase transition resin toner, the amount of colorant in the pressure-induced phase transition resin toner particles relative to the total amount of the pressure-induced phase transition resin toner particles is preferably 1.0 mass% or less, more preferably as low as possible in order to improve the transparency of the pressure-induced phase transition resin toner.

### -Structure of Pressure-Induced Phase Transition Resin Toner Particles-

The internal structure of the pressure-induced phase transition resin toner particles is preferably a sea-island structure. The sea-island structure preferably has a sea phase containing the styrene-based resin and island phases containing the (meth)acrylate-based resin and dispersed in the sea phase. A specific form of the styrene-based resin contained in the sea phase is as described above. A specific form of the (meth)acrylate-based resin contained in the island phases is as described above. Island phases free of the (meth)acrylate-based resin may be dispersed in the sea phase.

When the pressure-induced phase transition resin toner particles have a sea-island structure, the island phases preferably have an average size of 200 nm or more and 500 nm or less. When the island phases have an average size of 500 nm or less, the pressure-induced phase transition resin toner particles easily undergo phase transition under pressure. When the island phases have an average size of 200 nm or more, the pressure-induced phase transition resin toner particles have desired mechanical strength (e.g., strength resistant to deformation during stirring in a developing device). From these viewpoints, the island phases preferably have an average size of 220 nm or more and 450 nm or less, more preferably have an average size of 250 nm or more and 400 nm or less.

Examples of the method for controlling the average size of the island phases in the sea-island structure in the above range include increasing or reducing the amount of the (meth)acrylate-based resin relative to the amount of the styrene-based resin or increasing or reducing the length of time for maintaining a high temperature in the step of fusing and coalescing the aggregated resin particles in the method for producing pressure-induced phase transition resin toner particles described below.

The observation of the sea-island structure and the measurement of the average size of the island phases are carried out by the following methods.

The pressure-induced phase transition resin toner is embedded in epoxy resin and cut with a diamond knife or the like to prepare a section. The prepared section is stained with osmium tetroxide or ruthenium tetroxide in a desiccator. The stained section is observed with a scanning electron microscope (SEM). The sea phase and the island phases of the sea-island structure are distinguished by shades of color resulting from the degree of staining of the resins with osmium tetroxide or ruthenium tetroxide. The presence of the sea-island structure is confirmed by using this method. From the SEM image, 100 island phases are randomly selected, and the major axis of each island phase is measured, and the average value of 100 major axes is defined as the average size.

The pressure-induced phase transition resin toner particles may be pressure-induced phase transition resin toner particles each having a single-layer structure, or may be pressure-induced phase transition resin toner particles each having a core-shell structure having a core and a shell layer coating the core. To prevent or reduce fluidization of the pressure-induced phase transition resin toner under no pressure, the pressure-induced phase transition resin toner particles preferably have a core-shell structure.

When the pressure-induced phase transition resin toner particles have a core-shell structure, the core preferably contains a styrene-based resin and a (meth)acrylate-based resin in order to facilitate phase transition under pressure. In addition, the shell layer preferably contains a styrene-based resin in order to prevent or reduce fluidization of the pressure-induced phase transition resin toner under no pressure. A specific form of the styrene-based resin is as described above. A specific form of the (meth)acrylate-based resin is as described above.

When the pressure-induced phase transition resin toner particles have a core-shell structure, the core preferably has a sea phase containing the styrene-based resin and island phases containing the (meth)acrylate-based resin and dispersed in the sea phase. The average size of the island phases is preferably in the above range. In addition to the core having the above configuration, the shell layer preferably contains the styrene-based resin. In this case, the sea phase of the core is continuous with the shell layer, and the pressure-induced phase transition resin toner particles easily undergo phase transition under pressure. A specific form of the styrene-based resin contained in the sea phase of the core and the shell layer is as described above. A specific form of the (meth)acrylate-based resin contained in the island phases of the core is as described above.

Examples of the resin contained in the shell layer include polystyrene; and non-vinyl resins, such as epoxy resins, polyester resins, polyurethane resins, polyamide resins, cellulose resins, polyether resins, and modified rosins. These resins may be used alone or in combination of two or more.

The average thickness of the shell layer is preferably 120 nm or more, more preferably 130 nm or more, still more preferably 140 nm or more in order to prevent or reduce deformation of the pressure-induced phase transition resin toner particles, and preferably 550 nm or less, more preferably 500 nm or less, still more preferably 400 nm or less in order to facilitate the phase transition of the pressure-induced phase transition resin toner particles under pressure.

The average thickness of the shell layer is measured by the following method.

The pressure-induced phase transition resin toner is embedded in epoxy resin and cut with a diamond knife or the like to prepare a section. The prepared section is stained with osmium tetroxide or ruthenium tetroxide in a desiccator. The stained section is observed with a scanning electron microscope (SEM). From the SEM image, the cross sections of 10 pressure-induced phase transition resin toner particles are randomly selected. The thickness of the shell layer is measured at 20 points per pressure-induced phase transition resin toner particle, and the average value is calculated. The average value for 10 pressure-induced phase transition resin toner particles is defined as the average thickness.

The volume-average particle size (D50v) of the pressure-induced phase transition resin toner particles is preferably 4 µm or more, more preferably 5 µm or more, still more preferably 6 µm or more in order to facilitate handling of the pressure-induced phase transition resin toner particles, and preferably 12 µm or less, more preferably 10 µm or less, still more preferably 9 µm or less in order to facilitate the phase transition of the entire pressure-induced phase transition resin toner particles under pressure.

The volume-average particle size (D50v) of the pressure-induced phase transition resin toner particles is measured by using Coulter Multisizer II (available from Beckman Coulter, Inc.) with an aperture having an aperture diameter of 100 µm. To 2 mL of a 5 mass% aqueous solution of sodium alkylbenzene sulfonate, 0.5 mg or more and 50 mg or less of the pressure-induced phase transition resin toner particles are added and dispersed. Next, the resulting dispersion is mixed with 100 mL or more and 150 mL or less of an electrolyte (ISOTON-II available from Beckman Coulter Inc). The resulting mixture is subjected to a dispersion treatment with an ultrasonic disperser for 1 minute, and the obtained dispersion is used as a sample. The particle sizes of 50,000 particles having particle sizes of 2 µm or more and 60 µm or less in the sample are measured. The particle size at 50% cumulative volume from the smallest particle size in the volume-based particle size distribution is defined as a volume-average particle size (D50v).

### [External Additives]

Examples of external additives include inorganic particles. Examples of inorganic particles include SiO₂, TiO₂, Al₂O₃, CuO, ZnO, SnO₂, CeO₂, Fe₂O₃, MgO, BaO, CaO, K₂O, Na₂O, ZrO₂, CaO·SiO₂, K₂O·(TiO₂)n, Al₂O₃·2SiO₂, CaCO₃, MgCO₃, BaSO₄, and MgSO₄.

The surfaces of the inorganic particles serving as an external additive may be hydrophobized. Hydrophobization is performed by, for example, immersing the inorganic particles in a hydrophobizing agent. Examples of the hydrophobizing agent include, but are not limited to, a silane coupling agent, a silicone oil, a titanate coupling agent, and an aluminum coupling agent. These hydrophobizing agents may be used alone or in combination of two or more. The amount of the hydrophobizing agent is, for example, 1 part by mass or more and 10 parts by mass or less relative to 100 parts by mass of the inorganic particles.

Examples of external additives further include resin particles (resin particles made of, for example, polystyrene, polymethyl methacrylate, and melamine resin), and cleaning active agents (e.g., higher fatty acid metal salts, such as zinc stearate, and fluoropolymer particles).

The amount of external additives externally added relative to the mass of the pressure-induced phase transition resin toner particles is preferably 0.01 mass% or more and 5.0 mass% or less, more preferably 0.01 mass% or more and 2.0 mass% or less.

### (Properties of Pressure-Induced Phase Transition Resin Toner)

The pressure-induced phase transition resin toner has at least two glass transition temperatures, one of which may be the glass transition temperature of the styrene-based resin, and the other may be the glass transition temperature of the (meth)acrylate-based resin.

The pressure-induced phase transition resin toner may have three or more glass transition temperatures, but preferably has two glass transition temperatures. Examples of the form of the pressure-induced phase transition resin toner having two glass transition temperatures include a pressure-induced phase transition resin toner containing only the styrene-based resin and the (meth)acrylate-based resin; and a pressure-induced phase transition resin toner containing a small amount of resin other than the styrene-based resin and the (meth)acrylate-based resin (e.g., the amount of other resin is 5 mass% or less relative to the total mass of the pressure-induced phase transition resin toner).

The pressure-induced phase transition resin toner has at least two glass transition temperatures, wherein a difference between the lowest glass transition temperature and the highest glass transition temperature is 30°C or more. The difference between the lowest glass transition temperature and the highest glass transition temperature is more preferably 40°C or more, still more preferably 50°C or more, yet still more preferably 60°C or more in order to facilitate the phase transition of the pressure-induced phase transition resin toner under pressure. A difference between the lowest glass transition temperature and the highest glass transition temperature is up to, for example, 140°C or less, 130°C or less, 120°C or less.

The lowest glass transition temperature of the pressure-induced phase transition resin toner is preferably 10°C or lower, more preferably 0°C or lower, still more preferably -10°C or lower in order to facilitate the phase transition of the pressure-induced phase transition resin toner under pressure, and preferably -90°C or higher, more preferably -80°C or higher, still more preferably -70°C or higher in order to prevent or reduce fluidization of the pressure-induced phase transition resin toner under no pressure.

The highest glass transition temperature of the pressure-induced phase transition resin toner is preferably 30°C or higher, more preferably 40°C or higher, still more preferably 50°C or higher in order to prevent or reduce fluidization of the pressure-induced phase transition resin toner under no pressure, and preferably 70°C or lower, more preferably 65°C or lower, still more preferably 60°C or lower in order to facilitate the phase transition of the pressure-induced phase transition resin toner under pressure.

The glass transition temperature of the pressure-induced phase transition resin toner is determined from the differential scanning calorimetry curve (DSC curve) obtained by differential scanning calorimetry (DSC). More specifically, the glass transition temperature is determined in accordance with "extrapolated glass transition onset temperature" described in the method for determining a glass transition temperature in "Testing Methods for Transition Temperatures of Plastics" in JIS K7121:1987.

The pressure-induced phase transition resin toner undergoes phase transition under pressure and satisfies Formula 1 below.${10}^{∘} C \leq T 1 - T 2$

In Formula 1, T1 is a temperature corresponding to a viscosity of 10,000 Pa·s at a pressure of 1 MPa, and T2 is a temperature corresponding to a viscosity of 10,000 Pa·s at a pressure of 10 MPa.

The temperature difference (T1 - T2) is 10°C or more, preferably 15°C or more, more preferably 20°C or more in order to facilitate the phase transition of the pressure-induced phase transition resin toner under pressure, and preferably 120°C or less, more preferably 100°C or less, still more preferably 80°C or less in order to prevent or reduce fluidization of the pressure-induced phase transition resin toner under no pressure.

The temperature T1 is preferably 140°C or lower, more preferably 130°C or lower, still more preferably 120°C or lower, yet still more preferably 115°C or lower. The lower limit of the temperature T1 is preferably 80°C or higher, more preferably 85°C or higher.

The temperature T2 is preferably 40°C or higher, more preferably 50°C or higher, still more preferably 60°C or higher. The upper limit of the temperature T2 is preferably 85°C or lower.

Examples of the indicator for the susceptibility of the pressure-induced phase transition resin toner to phase transition under pressure include a temperature difference (T1 - T3) between the temperature T1 corresponding to a viscosity of 10,000 Pa·s at a pressure of 1 MPa and the temperature T3 corresponding to a viscosity of 10,000 Pa·s at a pressure of 4 MPa. The temperature difference (T1 - T3) is preferably 5°C or more. To facilitate the phase transition of the pressure-induced phase transition resin toner according to the exemplary embodiment under pressure, the temperature difference (T1 - T3) is preferably 5°C or more, more preferably 10°C or more.

The temperature difference (T1 - T3) is typically 25°C or less.

To obtain a temperature difference (T1 - T3) of 5°C or more, the temperature T3 corresponding to a viscosity of 10,000 Pa·s at a pressure of 4 MPa for the pressure-induced phase transition resin toner is preferably 90°C or lower, more preferably 85°C or lower, still more preferably 80°C or lower. The lower limit of the temperature T3 is preferably 60°C or higher.

The method for determining the temperature T1, the temperature T2, and the temperature T3 is as described below.

A pellet sample is prepared by compressing the pressure-induced phase transition resin toner. The pellet sample is set in a flow tester (CFT-500 available from Shimadzu Corporation). The applied pressure is fixed at 1 MPa, and the viscosity against temperature at 1 MPa is measured. From the obtained viscosity graph, the temperature T1 corresponding to a viscosity of 10⁴ Pa·s at an applied pressure of 1 MPa is determined. The temperature T2 is determined in the same manner as in the method for determining the temperature T1 except that the applied pressure is changed from 1 MPa to 10 MPa. The temperature T3 is determined in the same manner as in the method for determining the temperature T1 except that the applied pressure is changed from 1 MPa to 4 MPa. The temperature difference (T1 - T2) is calculated from the temperature T1 and the temperature T2. The temperature difference (T1 - T3) is calculated from the temperature T1 and the temperature T3.

### (Method for Producing Pressure-Induced Phase Transition Resin Toner)

The pressure-induced phase transition resin toner is obtained by externally adding external additives to pressure-induced phase transition resin toner particles after producing the pressure-induced phase transition resin toner particles.

The pressure-induced phase transition resin toner may be produced by using any one of dry production methods (e.g., a kneading-grinding method) and wet production methods (e.g., an aggregation-coalescence method, a suspension-polymerization method, and a dissolution-suspension method). These production methods are not limited and may be known production methods. Of these methods, an aggregation-coalescence method may be used to produce the pressure-induced phase transition resin toner particles.

### EXAMPLES

Hereinafter, Examples (Test Examples) where the pressure-induced phase transition resin toner described above easily undergoes phase transition under pressure and has good adhesion will be described. In the following description, the units "part" and "%" are on a mass basis, unless otherwise specified.

### <Preparation of Dispersion Containing Styrene-Based Resin Particles>

### [Preparation of Styrene-Based Resin Particle Dispersion (St1)]

· Styrene: 390 parts
· n-Butyl acrylate: 100 parts
· Acrylic acid: 10 parts
· Dodecanethiol: 7.5 parts

The above materials were mixed and dissolved to prepare a monomer solution.

An anionic surfactant (Dowfax 2A1 available from The Dow Chemical Company) (8 parts) was dissolved in 205 parts of ion exchange water, and the monomer solution was added to the resulting solution and dispersed and emulsified to form an emulsion.

The anionic surfactant (Dowfax 2A1 available from The Dow Chemical Company) (2.2 parts) was dissolved in 462 parts of ion exchange water, and the resulting solution was placed in a flask for polymerization equipped with a stirrer, a thermometer, a reflux condenser, and a nitrogen gas inlet tube. The solution was heated to 73°C under stirring and held at this temperature.

Ammonium persulfate (3 parts) was dissolved in 21 parts of ion exchange water, and the resulting solution was added dropwise to the flask for polymerization through a metering pump over 15 minutes, and the emulsion was then added dropwise over 160 minutes using a metering pump.

Next, the flask for polymerization was held at 75°C for three hours under gentle stirring, and then returned to room temperature.

This process produced a styrene-based resin particle dispersion (St1) containing a styrene-based resin particles and having a solid content of 42%, wherein the resin particles had a volume-average particle size (D50v) of 174 nm, a weight-average molecular weight of 49,000 as determined by GPC (UV detection), and a glass transition temperature of 54°C.

The styrene-based resin particle dispersion (St1) was dried to obtain the styrene-based resin particles, and the thermal behavior of the styrene-based resin particles in a temperature range from -100°C to 100°C was analyzed with a differential scanning calorimeter (DSC-60A available from Shimadzu Corporation), and as a result, one glass transition temperature was observed. Table 1 shows the glass transition temperature.

### [Preparation of Styrene-Based Resin Particle Dispersions (St2) and (St3)]

Styrene-based resin particle dispersions (St2) and (St3) were prepared in the same manner as in the preparation of the styrene-based resin particle dispersion (St1) except that the monomers were changed as shown in Table 1.

Table 1 shows the composition and physical properties of the styrene-based resin particle dispersion (St1) and other dispersions. In Table 1, the monomers are denoted by the following abbreviations.

Styrene: St, n-butyl acrylate: BA, 2-ethylhexyl acrylate: 2EHA, ethyl acrylate: EA, 4-hydroxybutyl acrylate: 4HBA, acrylic acid: AA, methacrylic acid: MAA, 2-carboxyethyl acrylate: CEA

**[Table 1]**

| Styrene-Based Resin Particle Dispersion | | | | | | | | | | | |
|---|---|---|---|---|---|---|---|---|---|---|---|
| No. | polymer components (mass ratio) | | | | | | | | D50v of resin particles | Mw (k) | Tg |
| | St | BA | 2EHA | EA | 4HBA | AA | MAA | CEA | nm | - | °C |
| St1 | 78 | 20 | 0 | 0 | 0 | 2 | 0 | 0 | 174 | 49 | 54 |
| St2 | 88 | 10 | 0 | 0 | 0 | 2 | 0 | 0 | 170 | 50 | 76 |
| St3 | 83 | 15 | 0 | 0 | 0 | 2 | 0 | 0 | 172 | 52 | 65 |

### <Preparation of Dispersion Containing Composite Resin Particles>

### [Preparation of Composite Resin Particle Dispersion (M1)]

· Styrene-based resin particle dispersion (St1): 1190 parts (solid content: 500 parts)
· 2-Ethylhexyl acrylate: 250 parts
· n-Butyl acrylate: 250 parts
· Ion exchange water: 982 parts

The above materials were placed in a flask for polymerization, stirred at 25°C for one hour, and then heated to 70°C.

Ammonium persulfate (2.5 parts) was dissolved in 75 parts of ion exchange water, and the resulting solution was added dropwise to the flask for polymerization over 60 minutes using a metering pump.

Next, the flask for polymerization was held at 70°C for three hours under gentle stirring, and then returned to room temperature.

This process produced a composite resin particle dispersion (M1) containing composite resin particles and having a solid content of 32%, wherein the resin particles had a volume-average particle size (D50v) of 219 nm, and a weight-average molecular weight of 219,000 as determined by GPC (UV detection).

The composite resin particle dispersion (M1) was dried to obtain the composite resin particles, and the thermal behavior of the composite resin particles in a temperature range from -150°C to 100°C was analyzed with a differential scanning calorimeter (DSC-60A available from Shimadzu Corporation), and as a result, two glass transition temperatures were observed. Table 2 shows the glass transition temperatures.

### [Preparation of Composite Resin Particle Dispersions (M2) and (M3)]

Composite resin particle dispersions (M2) and (M3) were prepared in the same manner as in the preparation of the composite resin particle dispersion (M1) except that the styrene-based resin particle dispersion (St1) was changed as described in Table 2 or the polymer components of the (meth)acrylate-based resin were changed as described in Table 2.

### [Preparation of Composite Resin Particle Dispersions (M4) and (M5)]

Composite resin particle dispersions (M4) and (M5) were prepared in the same manner as in the preparation of the composite resin particle dispersion (M1) except that the amounts of 2-ethylhexyl acrylate and n-butyl acrylate used were adjusted.

Table 2 shows the composition and physical properties of the composite resin particle dispersion (M1) and other dispersions. In Table 2, the monomers are denoted by the following abbreviations.

Styrene: St, n-butyl acrylate: BA, 2-ethylhexyl acrylate: 2EHA, acrylic acid: AA

**[Table 2]**

| Composite Resin Particle Dispersion | | | | | | | | | |
|---|---|---|---|---|---|---|---|---|---|
| No. | St-based resin | | | Ac-based resin | composite resin particles (or comparative resin particles) | | | | |
| | St-based resin particle dispersion | polymer components | Tg | polymer components | mass ratio of St-based resin to Ac-based resin (St:Ac) | D50v of resin particles | Mw (k) | Tg | |
| | | | °C | | | nm | - | °C | °C |
| M1 | St1 | St/BA/AA=78/20/2 | 54 | 2EHA/BA=50/50 | 50:50 | 219 | 219 | -52 | 54 |
| M2 | St2 | St/BA/AA=88/10/2 | 76 | 2EHA/BA=50/50 | 50:50 | 218 | 240 | -52 | 76 |
| M3 | St3 | St/BA/AA=83/15/2 | 65 | 2EHA/BA=50/50 | 50:50 | 220 | 231 | -52 | 65 |
| M4 | St1 | St/BA/AA=78/20/2 | 54 | 2EHA/BA=50/50 | 90:10 | 182 | 180 | -52 | 54 |
| M5 | St1 | St/BA/AA=78/20/2 | 54 | 2EHA/BA=50/50 | 80:20 | 190 | 210 | -52 | 54 |

### <Preparation of Pressure-Induced Phase Transition Resin Toner>

### [Preparation of Pressure-Induced Phase Transition Resin Toner (1)]

· Composite resin particle dispersion (M1): 504 parts
· Ion exchange water: 710 parts
· Anionic surfactant (The Dow Chemical Company, Dowfax 2A1): 1 part

The above materials were placed in a reaction vessel equipped with a thermometer and a pH meter, and the pH was adjusted to 3.0 by adding a 1.0% nitric acid aqueous solution at a temperature of 25°C. Then, 23 parts of a 2.0% aluminum sulfate aqueous solution was added while the mixture was dispersed at a number of rotation of 5,000 rpm using a homogenizer (ULTRA-TURRAX T50 available from IKA). Next, a stirrer and a mantle heater were set at the reaction vessel, and the reaction vessel was heated at a heating rate of 0.2°C/min to 40°C and at a heating rate of 0.05°C/min above 40°C. The particle size was measured every 10 minutes by using Coulter Multisizer II (available from Beckman Coulter, Inc., aperture diameter: 50 µm). When the volume-average particle size reached 5.0 µm, the mixture was held at that temperature, and 170 parts of the styrene-based resin particle dispersion (St1) was charged over 5 minutes. After completion of the charging, the slurry was held at 50°C for 30 minutes, and the pH of the slurry was adjusted to 6.0 by adding a 1.0% sodium hydroxide aqueous solution. Next, while the pH was adjusted to 6.0 every 5°C, the slurry was heated at a heating rate of 1°C/min to 90°C and held at 90°C. As the particle shape and the surface texture were observed with an optical microscope and a field emission transmission electron microscope (FE-SEM), the coalescence of the particles was found after 10 hours, and the vessel was cooled to 30°C with cold water over 5 minutes.

The slurry after cooling was passed through a nylon mesh with a mesh size of 15 µm to remove coarse particles, and the slurry having passed through the mesh was filtered under reduced pressure with an aspirator. The solid remaining on the filter paper was crushed by hand as finely as possible, charged into ion exchange water (temperature 30°C) with an amount of 10 times the solid content, and stirred for 30 minutes. Next, the mixture was filtered under reduced pressure with an aspirator, and the solid remaining on the filter paper was crushed by hand as finely as possible, charged into ion exchange water (temperature 30°C) with an amount of 10 times the solid content, and stirred for 30 minutes. The mixture was then filtered under reduced pressure again with the aspirator, and the electrical conductivity of the filtrate was measured. This operation was repeated until the electrical conductivity of the filtrate reached 10 µS/cm or less, whereby the solid was washed.

The washed solid was finely crushed with a wet dry granulator (Comil) and vacuum-dried in an oven at 25°C for 36 hours to provide pressure-induced phase transition resin toner particles (1). The pressure-induced phase transition resin toner particles (1) had a volume-average particle size of 8.0 µm.

The pressure-induced phase transition resin toner particles (1) (100 parts) and 1.5 parts of hydrophobic silica (RY50 available from Nippon Aerosil Co., Ltd.) were mixed, and mixed by using a sample mill at a rotational speed of 13,000 rpm for 30 seconds. The mixture was sifted through a vibrating screen with a mesh size of 45 µm to provide a pressure-induced phase transition resin toner (1).

The thermal behavior of the pressure-induced phase transition resin toner (1) used as a sample was analyzed in a temperature range from -150°C to 100°C with a differential scanning calorimeter (DSC-60A available from Shimadzu Corporation), and as a result, two glass transition temperatures were observed. Table 3 shows the glass transition temperatures.

As the temperature T1 and the temperature T2 of the pressure-induced phase transition resin toner (1) were determined by the measurement method described above, the pressure-induced phase transition resin toner (1) was found to satisfy Formula 1 of "10°C ≤ T1 - T2".

As the cross section of the pressure-induced phase transition resin toner (1) was observed with a scanning electron microscope (SEM), the sea-island structure was observed. The pressure-induced phase transition resin toner (1) had a core where island phases were present and a shell layer where no island phase was present. A sea phase contained a styrene-based resin, and the island phases contained a (meth)acrylate-based resin. The average size of the island phases was determined by the measurement method described above. Table 3 shows the average size of the island phases.

### [Preparation of Pressure-Induced Phase Transition Resin Toners (2) to (5)]

Pressure-induced phase transition resin toners (2) to (5) were prepared in the same manner as in the preparation of the pressure-induced phase transition resin toner (1) except that the composite resin particle dispersion and the styrene-based resin particle dispersion were changed as described in Table 3.

As the temperature T1 and the temperature T2 of the pressure-induced phase transition resin toners (2) to (5) were determined by the measurement method described above, the pressure-induced phase transition resin toners (2) to (5) were found to satisfy Formula 1 of "10°C ≤ T1 - T2".

### [Evaluation of Pressure-Responsive Phase Transition]

A temperature difference (T1 - T3), which is an indicator for the susceptibility of each pressure-induced phase transition resin toner to phase transition under pressure, was determined. The temperature T1 and the temperature T3 of each pressure-induced phase transition resin toner used as a sample were measured with a flow tester (CFT-500 available from Shimadzu Corporation), and the temperature difference (T1 - T3) was calculated. Table 3 shows the temperature difference (T1 - T3).

### [Evaluation of Adhesion]

Postcard paper V424 available from FUJIFILM Business Innovation Corp. was prepared as a recording medium. An image having an area density of 30% and including black texts and full-color photo images was formed on one side of the postcard paper and fixed thereon by using an image forming apparatus DocuCentre C7550I available from FUJIFILM Business Innovation Corp., and commercial yellow toner, magenta toner, cyan toner, and black toner available from FUJIFILM Business Innovation Corp.

The pressure-induced phase transition resin toner was spread on the entire image forming surface of the postcard paper such that the amount of the pressure-induced phase transition resin toner applied was 3 g/m². The postcard paper was passed through a belt roll fusing unit so that the pressure-induced phase transition resin toner was fixed on the image forming surface of the postcard paper to form a layer of the pressure-induced phase transition resin toner.

The postcard paper having the layer of the pressure-induced phase transition resin toner on the image forming surface was folded in two such that the image forming surface came inside by using a sealer PRESSLE multi II available from Toppan Forms Co., Ltd., and the two-folded postcard paper was pressed so that the inside image forming surfaces were bonded to each other at a pressure of 90 MPa.

With the apparatus and conditions described above, ten postcards were continuously produced by folding postcard paper in two such that the image forming surface came inside and bonding the inside image forming surfaces to each other. The tenth postcard was cut in the long side direction into a width of 15 mm to prepare a rectangular test piece, which was then subjected to the 90-degree peel test. The peel rate of the 90-degree peel test was 20 mm/min, and after starting the measurement, the load (N) was obtained from 10 mm to 50 mm at intervals of 0.4 mm. The average load was calculated, and the loads (N) of three test pieces are averaged. The load (N) required for the peeling was classified as follows. Table 3 shows the results.

A: 0.8 N or more
B: 0.6 N or more and less than 0.8 N
C: 0.4 N or more and less than 0.6 N
D: 0.2 N or more and less than 0.4 N
E: less than 0.2 N

**[Table 3]**

| Pressure-induced phase transition resin toner | Core | | | | Shell Layer | Pressure-Induced Phase Transition Resin Toner | | | | | | | | |
|---|---|---|---|---|---|---|---|---|---|---|---|---|---|---|
| | Composite resin particle dispersion | polymer components of St-based resin | polymer components of Ac-based resin | mass ratio of St-based resin to Ac-based resin (St:Ac) | St-based resin particle dispersion | D50v | average size of island phases | Tg | | difference in Tg | T3 | pressure-responsive phase transition (T1 - T3) | Adhesion | Note |
| | | | | | | µm | nm | °C | °C | °C | °C | °C | | |
| 1 | M1 | St/BA/AA= 78/20/2 | 2EHA/BA =50/50 | 50:50 | St1 | 8.0 | 200 | -52 | 54 | 106 | 75 | 15 | A | Test Example |
| 2 | M2 | St/BA/AA= 88/10/2 | 2EHA/BA =50/50 | 50:50 | St2 | 110 | 250 | -52 | 76 | 128 | 70 | 13 | A | Test Example |
| 3 | M3 | St/BA/AA= 83/15/2 | 2EHA/BA =50/50 | 50:50 | St3 | 110 | 280 | -52 | 65 | 117 | 78 | 15 | A | Test Example |
| 4 | M4 | St/BA/AA= 78/20/2 | 2EHA/BA =50/50 | 90:10 | St1 | 8.0 | 450 | -52 | 54 | 106 | 85 | 5 | C | Test Example |
| 5 | M5 | St/BA/AA= 78/20/2 | 2EHA/BA =50/50 | 80:20 | St1 | 8.0 | 400 | -52 | 54 | 106 | 80 | 10 | B | Test Example |

As described above, the pressure-induced phase transition resin toners of Test Examples are found to easily undergo phase transition under pressure and have good adhesion.

As the pressure-induced phase transition resin toners of Test Examples 1 to 3 are compared with those of Test Examples 4 to 5, the adhesion increases with decreasing average size of island phases in the sea-island structure.

The present invention is described in detail with reference to specific exemplary embodiments, but it will be obvious to those skilled in the art that the present invention is not limited to the exemplary embodiments, and various other embodiments can be provided without departing from the scope of the present invention. For example, in the first exemplary embodiment, the first pop-up image portion 30 and the second pop-up image portion 40, which are three-dimensional parts, are formed in a first side area of the print medium P1 in the medium longitudinal direction. A three-dimensional object may be produced by using a print medium P where the print medium P1 having no three-dimensional part has no second side area in the medium longitudinal direction.

In the first exemplary embodiment, the three-dimensional object 110 is produced by using one print medium P1. The three-dimensional object 110 may be produced by using two print media, that is, by using a first side area and a second side area of the print medium P1 in the medium longitudinal direction as separate print media.

In the first exemplary embodiment, the adhesive force of the adhesive parts is varied by changing the toner concentration. The adhesive force of the adhesive parts may be varied by changing the type of toner. In this case, the effect obtained by changing the adhesive force of the adhesive parts is not obtained by changing the toner concentration.

In the first exemplary embodiment, an adhesive part with weak adhesive force may be formed in the color area 24 on the front side of the print medium P1, although not described. This prevents the print medium P1 from spontaneously unfolding when the print medium P1 is folded into four.

In the fifth exemplary embodiment, the adhesive force of the adhesive part 550 is varied stepwise. The adhesive force of the adhesive part 550 may be gradually varied.

In the sixth exemplary embodiment, the front side and the back side of the print medium P1 have different colors in the adhesive parts. For example, when two or more adhesive parts are formed on one side of the print medium P1, one adhesive part formed on one side may be different in color from other adhesive parts. It is thus easier to extract defective products during the process compared with a case where the adhesive parts all have the same color.

This application claims priority to Japanese Patent Application No. 2021-154745, filed September 22, 2021.

## Claims

1. A method for producing a three-dimensional object, comprising:
a step of forming an image (20) including a pop-up image portion (30) inside an area (32) on a sheet-shaped print medium (P1) by an electrophotographic system (100), wherein the pop-up image portion (30) is divided into a first pop-up image portion (30a) and a second pop-up image portion (30b), and forming an adhesive part (50a) on a portion of the sheet-shaped print medium (P1) between the first pop-up image portion (30a) and the second pop-up image portion (30b) by the electrophotographic system using a pressure-induced phase transition resin toner that exhibits adhesion when undergoing phase transition under pressure;
a step of forming a cut (32a) on part of the edge of the area (32);
a step of forming a fold line at a boundary (36a) between the adhesive part and the first pop-up image portion and at a boundary (36b) between the adhesive part and the second pop-up image portion; and
a step of forming a three-dimensional part by folding the print medium in two at a boundary (39) between a first side area and a second side area so that a first side area of the adhesive part bonds to a second side area of the adhesive part and opening the folded print medium to raise the three-dimensional part where the first pop-up image portion and the second pop-up image portion are integrated.

2. The method for producing a three-dimensional object according to claim 1, wherein the area (32) is a blank area surrounded by a color area (24) formed in a central area of an image (22) in a medium longitudinal direction (V1) and a central area of the print medium in a medium transverse direction (V2)

3. The method for producing a three-dimensional object according to claim 2, wherein the blank area has an elliptical shape elongating in the medium transverse direction and the cut is formed on a straight edge of the blank area on a first side in the medium longitudinal direction and on curved edges of the blank area on both sides in the medium transverse direction.

4. The method for producing a three-dimensional object according to claim 2 or claim 3, wherein the pop-up image portion is divided into the first pop-up image portion and the second pop-up image portion in the medium transverse direction.

5. The method for producing a three-dimensional object according to any of claims 1 to 4, wherein the portion of the sheet-shaped print medium between the first pop-up image portion and the second pop-up image portion is a triangular portion (36), the first pop-up image portion and the second pop-up image portion are in contact with each other at a point (Z1), the adhesive part has a triangular shape and is formed in the triangular portion, and the method comprises folding the print medium in two at the boundary between the first side area and the second side area in the medium transverse direction so that the adhesive part bonds a first side area of the triangular portion in the medium transverse direction to a second side area of the triangular portion.

6. The method for producing a three-dimensional object according to any one of claims 1 to 5,
wherein the step of forming the three-dimensional part involves folding the print medium into a flat shape and pressing the print medium.

7. The method for producing a three-dimensional object according to any one of claims 1 to 6,
wherein the pressure-induced phase transition resin toner includes:
a styrene-based resin containing styrene and a vinyl monomer other than styrene as polymer components; and
a (meth)acrylate-based resin containing at least two (meth)acrylates as polymer components, wherein a mass percentage of the (meth)acrylates relative to a total mass of polymer components of the (meth)acrylate-based resin is 90 mass% or more, and
the pressure-induced phase transition resin toner has at least two glass transition temperatures, and a difference between a lowest glass transition temperature and a highest glass transition temperature is 30°C or more.

8. The method for producing a three-dimensional object according to claim 7,
wherein the pressure-induced phase transition resin toner contains pressure-induced phase transition resin toner particles, and
the pressure-induced phase transition resin toner particles include a sea phase containing the styrene-based resin and island phases containing the (meth)acrylate-based resin and dispersed in the sea phase.

9. The method for producing a three-dimensional object according to claim 8,
wherein the island phases have an average size of 200 nm or more and 500 nm or less.

## Patentansprüche

1. Verfahren zur Herstellung eines dreidimensionalen Objekts, umfassend:
einen Schritt des Bildens eines Bildes (20), das einen Pop-up-Bildabschnitt (30) beinhaltet, innerhalb eines Bereichs (32) auf einem blattförmigen Druckmedium (P1) durch ein elektrofotografisches System (100), wobei der Pop-up-Bildabschnitt (30) in einen ersten Pop-up-Bildabschnitt (30a) und einen zweiten Pop-up-Bildabschnitt (30b) unterteilt ist, und des Bildens eines Klebstoffteils (50a) auf einem Abschnitt des blattförmigen Druckmediums (P1) zwischen dem ersten Pop-up-Bildabschnitt (30a) und dem zweiten Pop-up-Bildabschnitt (30b) durch das elektrofotografische System unter Verwendung eines druckinduzierten Phasenübergangsharztoners, der eine Haftung aufweist, wenn er unter Druck einen Phasenübergang erfährt;
einen Schritt des Bildens eines Schnitts (32a) an einem Teil der Kante des Bereichs (32);
einen Schritt des Bildens einer Faltlinie an einer Grenze (36a) zwischen dem Klebstoffteil und dem ersten Pop-up-Bildabschnitt und an einer Grenze (36b) zwischen dem Klebstoffteil und dem zweiten Pop-up-Bildabschnitt; und
einen Schritt des Bildens eines dreidimensionalen Teils durch Falten des Druckmediums in zwei an einer Grenze (39) zwischen einem ersten Seitenbereich und einem zweiten Seitenbereich, so dass ein erster Seitenbereich des Klebstoffteils an einen zweiten Seitenbereich des Klebstoffteils bindet, und des Öffnens des gefalteten Druckmediums, um das dreidimensionale Teil aufzurichten, wo der erste Pop-up-Bildabschnitt und der zweite Pop-up-Bildabschnitt integriert sind.

2. Verfahren zur Herstellung eines dreidimensionalen Objekts nach Anspruch 1, wobei der Bereich (32) ein leerer Bereich ist, der von einem Farbbereich (24) umgeben ist, der in einem zentralen Bereich eines Bildes (22) in einer Mediumslängsrichtung (V1) und einem zentralen Bereich des Druckmediums in einer Mediumsquerrichtung (V2) gebildet ist.

3. Verfahren zur Herstellung eines dreidimensionalen Objekts nach Anspruch 2, wobei der leere Bereich eine elliptische Form aufweist, die sich in der Mediumsquerrichtung erstreckt, und der Schnitt an einer geraden Kante des leeren Bereichs auf einer ersten Seite in der Mediumslängsrichtung und an gekrümmten Kanten des leeren Bereichs auf beiden Seiten in der Mediumsquerrichtung gebildet ist.

4. Verfahren zur Herstellung eines dreidimensionalen Objekts nach Anspruch 2 oder Anspruch 3, wobei der Pop-up-Bildabschnitt in den ersten Pop-up-Bildabschnitt und den zweiten Pop-up-Bildabschnitt in der Mediumsquerrichtung unterteilt ist.

5. Verfahren zur Herstellung eines dreidimensionalen Objekts nach einem der Ansprüche 1 bis 4, wobei der Abschnitt des blattförmigen Druckmediums zwischen dem ersten Pop-up-Bildabschnitt und dem zweiten Pop-up-Bildabschnitt ein dreieckiger Abschnitt (36) ist, der erste Pop-up-Bildabschnitt und der zweite Pop-up-Bildabschnitt an einem Punkt (Z1) miteinander in Kontakt sind, das Klebstoffteil eine dreieckige Form aufweist und in dem dreieckigen Abschnitt gebildet ist, und das Verfahren das Falten des Druckmediums in zwei an der Grenze zwischen dem ersten Seitenbereich und dem zweiten Seitenbereich in der Mediumsquerrichtung umfasst, so dass das Klebstoffteil einen ersten Seitenbereich des dreieckigen Abschnitts in der Mediumsquerrichtung an einen zweiten Seitenbereich des dreieckigen Abschnitts verklebt.

6. Verfahren zur Herstellung eines dreidimensionalen Objekts nach einem der Ansprüche 1 bis 5,
wobei der Schritt des Bildens des dreidimensionalen Teils das Falten des Druckmediums in eine flache Form und das Pressen des Druckmediums beinhaltet.

7. Verfahren zur Herstellung eines dreidimensionalen Objekts nach einem der Ansprüche 1 bis 6,
wobei der druckinduzierte Phasenübergangsharztoner Folgendes beinhaltet:
ein styrolbasiertes Harz, das Styrol und ein anderes Vinylmonomer als Styrol als Polymerkomponenten enthält; und
ein (meth)acrylatbasiertes Harz, das mindestens zwei (Meth)acrylate als Polymerkomponenten enthält, wobei ein Massenprozentsatz der (Meth)acrylate relativ zu einer Gesamtmasse von Polymerkomponenten des (meth)acrylatbasierten Harzes 90 Massen-% oder mehr beträgt, und
der druckinduzierte Phasenübergangsharztoner mindestens zwei Glasübergangstemperaturen aufweist, und ein Unterschied zwischen einer niedrigsten Glasübergangstemperatur und einer höchsten Glasübergangstemperatur 30 °C oder mehr beträgt.

8. Verfahren zur Herstellung eines dreidimensionalen Objekts nach Anspruch 7,
wobei der druckinduzierte Phasenübergangsharztoner druckinduzierte Phasenübergangsharztonerpartikel enthält, und die druckinduzierten Phasenübergangsharztonerpartikel eine Seephase, die das styrolbasierte Harz enthält, und Inselphasen, die das (meth)acrylatbasierte Harz enthalten und in der Seephase dispergiert sind, beinhalten.

9. Verfahren zur Herstellung eines dreidimensionalen Objekts nach Anspruch 8,
wobei die Inselphasen eine durchschnittliche Größe von 200 nm oder mehr und 500 nm oder weniger aufweisen.

## Revendications

1. Procédé de fabrication d'un objet tridimensionnel, comprenant :
une étape de formation d'une image (20) comprenant une partie d'image en relief (30) à l'intérieur d'une zone (32) sur un support d'impression en forme de feuille (P1) par un système électrophotographique (100), la partie d'image en relief (30) étant divisée en une première partie d'image en relief (30a) et une deuxième partie d'image en relief (30b), et de formation d'une partie adhésive (50a) sur une partie du support d'impression en forme de feuille (P1) entre la première partie d'image en relief (30a) et la deuxième partie d'image en relief (30b) par le système électrophotographique utilisant un toner de résine à transition de phase induite par la pression qui présente une adhésion lorsqu'il subit une transition de phase sous pression ;
une étape de formation d'une découpe (32a) sur une partie du bord de la zone (32) ;
une étape de formation d'une ligne de pliure à une limite (36a) entre la partie adhésive et la première partie d'image en relief et à une limite (36b) entre la partie adhésive et la deuxième partie d'image en relief ; et
une étape de formation d'une pièce tridimensionnelle en pliant le support d'impression en deux à une limite (39) entre une première zone latérale et une deuxième zone latérale de sorte qu'une première zone latérale de la partie adhésive se lie à une deuxième zone latérale de la partie adhésive et en ouvrant le support d'impression plié pour soulever la pièce tridimensionnelle où la première partie d'image en relief et la deuxième partie d'image en relief sont intégrées.

2. Procédé de fabrication d'un objet tridimensionnel selon la revendication 1, dans lequel la zone (32) est une zone vierge entourée d'une zone colorée (24) formée dans une zone centrale d'une image (22) dans une direction longitudinale de support (V1) et une zone centrale du support d'impression dans une direction transversale de support (V2).

3. Procédé de fabrication d'un objet tridimensionnel selon la revendication 2, dans lequel la zone vierge a une forme elliptique allongée dans la direction transversale de support et la découpe est formée sur un bord droit de la zone vierge sur un premier côté dans la direction longitudinale de support et sur les bords courbes de la zone vierge des deux côtés dans la direction transversale de support.

4. Procédé de fabrication d'un objet tridimensionnel selon la revendication 2 ou la revendication 3, dans lequel la partie d'image en relief est divisée en la première partie d'image en relief et la deuxième partie d'image en relief dans la direction transversale de support.

5. Procédé de fabrication d'un objet tridimensionnel selon l'une quelconque des revendications 1 à 4, dans lequel la partie du support d'impression en forme de feuille située entre la première partie d'image en relief et la deuxième partie d'image en relief est une partie triangulaire (36), la première partie d'image en relief et la deuxième partie d'image en relief sont en contact l'une avec l'autre en un point (Z1), la partie adhésive a une forme triangulaire et est formée dans la partie triangulaire, et le procédé comprend le pliage du support d'impression en deux à la limite entre la première zone latérale et la deuxième zone latérale dans la direction transversale du support de sorte que la partie adhésive colle une première zone latérale de la partie triangulaire dans la direction transversale du support à une deuxième zone latérale de la partie triangulaire.

6. Procédé de fabrication d'un objet tridimensionnel selon l'une quelconque des revendications 1 à 5,
dans lequel l'étape de formation de la pièce tridimensionnelle consiste à plier le support d'impression en une forme plate et à presser le support d'impression.

7. Procédé de fabrication d'un objet tridimensionnel selon l'une quelconque des revendications 1 à 6,
dans lequel le toner de résine à transition de phase induite par la pression comprend :
une résine à base de styrène contenant du styrène et un monomère vinylique autre que le styrène comme composants polymères ; et
une résine à base de (méth)acrylate contenant au moins deux (méth)acrylates comme composants polymères, le pourcentage massique des (méth)acrylates par rapport à la masse totale des composants polymères de la résine à base de (méth)acrylate étant de 90 % ou plus, et
le toner de résine à transition de phase induite par la pression possède au moins deux températures de transition vitreuse, et
la différence entre une température de transition vitreuse minimale et une température de transition vitreuse maximale est de 30 °C ou plus.

8. Procédé de fabrication d'un objet tridimensionnel selon la revendication 7,
dans lequel le toner de résine à transition de phase induite par la pression contient des particules de toner de résine à transition de phase induite par la pression, et
les particules de toner de résine à transition de phase induite par la pression incluent une phase de mer contenant la résine à base de styrène et des phases insulaires contenant la résine à base de (méth)acrylate et dispersées dans la phase de mer.

9. Procédé de fabrication d'un objet tridimensionnel selon la revendication 8,
dans lequel les phases insulaires ont une taille moyenne de 200 nm ou plus et de 500 nm ou moins.
